# NEW EUROPEAN PATENT SPECIFICATION

(11) **EP 0 423 753 B2**
(45) Date of publication and mention of the opposition decision: **22.12.1999**
(45) Mention of the grant of the patent: 11.01.1995
(21) Application number: 90119902.6
(22) Date of filing: 17.10.1990
(51) Int. Cl.: G01N 27/90

(54) **Method and apparatus for displaying defects in tubular members**
Methode und Gerät zur Fehlerdarstellung in Rohren
Méthode et appareil pour l'affichage des défauts dans des tubes

(30) Priority: 19.10.1989 US 424136
(43) Date of publication of application: 24.04.1991
(73) Proprietor: TUBOSCOPE VETCO INTERNATIONAL INC., Houston, Texas 77051 (US)
(72) Inventor: Lam, Clive C., Tomball, Texas 77375 (US)
(74) Representative: Herrmann-Trentepohl, Werner, Dipl.-Ing.

(56) References cited:
- EP-A- 0 271 670
- EP-A- 0 276 550
- EP-A- 0 301 906
- EP-A- 0 315 887
- EP-A- 0 376 635
- CH-A- 426 309
- DE-A- 1 932 462
- GB-A- 2 192 993
- US-A- 3 694 740
- Ottes, Stripf, Korrosion frühzeitig erkennen, in Elektronik 26 publ. 23.12.1988
- Kernforschungszentrum Karlsruhe, Ultrascan - das Ultraschall-Molchsystem zur Schadensdetektion in Pipelines, in KfK-Nachrichten, Jahrg. 21 1-2/89, pages 37-41, supplied as "Nachdruck" pages 1-8
- Gunther Krieg, Ultraschall-Molchsystem zur Korrosionsprüfung von Pipelines, in Tü vol. 28 (1987), No. 1, pages 9-11

## Description

This invention relates to defect inspection of tubular elements, and more particularly to displaying the results of such defect inspection in a readily usable format.

Continuous tubular strings formed of connectable tubular sections or elements, such as production tubing strings, drill pipe strings and casing strings, are used in the drilling, completion and production of subterranean oil and gas wells. The individual tubular elements, which are typically steel castings, frequently containing manufacturing defects such as seams, laps, inclusions, and gouges which could result in costly failures if undetected prior to installation. Therefore, tubular elements are commonly inspected at the point of manufacture so that any serious defect can be located and repaired, if possible, before the defective tubing is shipped to the well site.

Tubular elements are also subject to various forms of mechanical damage after being installed within a well. It is therefore advantageous that the individual tubular elements comprising a tubular string be inspected periodically. Typically, the inspection of tubular sections occurs after the individual sections comprising the tubing string have been removed from the well and disengaged. Defect inspections are conventionally performed on a section by section basis.

A number of techniques exist for determining the presence of a defect in a tubing section. For example, the location of internal and external radially extending and three-dimensional defects, including slug indusions, mechanical damage, pitting and fatigue cracks, has been determined by flux leakage techniques in which a longitudinal magnetic field is induced by one or more magnetic induction coils. External flux detectors are located around the tubing and the maximum signal is recorded to locate the defect. Similarly, longitudinal defects may be detected magnetically by the "rotating pole" method, where the magnetic field is applied from the outside by rotating electromagnets, and flux detectors positioned between the poles scan the outside surface of the pipe. Various techniques relating to electromagnetic inspection are well known in the art with a list of examples being set forth in the following U.S. patents:
4,492,115 4,636,727
4,555,665 4,698,590
4,578,642 4,704,580
4,611,170 4,710,712
4,629,985 4,715,442
4,629,991 4,792,756

While electromagnetic inspection systems have become widely accepted in the industry, various other techniques are also available and may even be preferable depending on the circumstances. Such other inspection techniques include the use of radiation as set forth in U.S. patent Nos. 3,835,323 and 3,855,465. Also known in the art, but less frequently utilized, are ultrasonic inspection systems.

Any of the above mentioned inspection techniques may be utilized to adequately detect the presence of defects located within the wall of tubular elements. The most essential function of existing inspection devices is to generate an electrical signal containing information regarding physical characteristics such as defects and other irregularities in a given segment of a tubular member, and to display such information in a useful manner. Typically, the display consists of a strip chart generated on a strip recorder, indicating the aforementioned electrical signal in analog form with a graphic indication for each irregularity sensed by the detecting device. An inspection crew then utilizes the graph as a guide to visually confirm the existence of serious defects which would result in the rejection of the tubular element being inspected. Conventional graphic displays, however, are severely limited in their ability to convey useful information to the inspection crew responsible for visually locating defects.

A conventional strip chart display provides a very general indication of the existence of a defect and its longitudinal position along the length of a tubular member. The existence of a defect is indicated by one or more vertical peaks in the graph, while the longitudinal position roughly corresponds to the location of the peak (or peaks) along the horizontal axis. If the display contains a plurality of closely adjacent peaks, conventional systems do not distinguish between several closely adjacent defects, a single large defect, or several defects at the same longitudinal position but spaced apart circumferentially. In fact, with respect to the third situation, conventional systems provide virtually no useful information to the inspection crew regarding the circumferential location of any defects. In short, conventional displays provide no usable information regarding the shape, size or amplitude of a defect, and only minimal information regarding the location.

The absence of circumferential position indications in conventional graphic displays becomes an even greater problem when the tubing to be inspected contains a longitudinal weld seam. Since a seam is essentially a continuous irregularity extending from one end of the pipe section to the other, it appears on a conventional graphic display as a continuous string of defects indicated by a solid line of peaks. As such, the weld seam indications on the graphic display completely overshadow all other indications, thus making it virtually impossible to distinguish the weld seam from the defects.

In addition to the imprecise defect locating capabilities of prior art systems, conventional inspection devices typically employ band pass filters to remove extraneous information, such as the presence of certain non-defect irregularities, from the incoming signal. This technique is effective for the intended purpose, but the information filtered out is permanently losL Conventional systems do not allow the user thereof to include all extreme signal values in the display, if so desired.

GB-A-2192993 discloses a eddy current surface mapping system in which an eddy current probe is scanned in two dimensions over an object to be mapped. First and second movement signals representing first and second scan directions of the probe are generated. The first and second movement signals are combined in a signal mixer with the the mutually perpendicular drive signals to produce first and second composite signals which vary as a function of the moment of the probe and eddy current signal. The composite signals are applied to a display mean for generating a three dimensional or pseudo-three dimensional image representative of irregularities in the part.

US-A-4,492,115 discloses a method and apparatus for measuring defects in ferromagnetic tubing wherein a tubing trip tool measures tubing average wall thickness, local defects and axial defects. A saturating magnetic field and a fluctuating magnetic field are applied to the tubing and the magnitude of the induced fields and the changes are measured to quantify defects in the tubing.

US-A-3,694,740 relates to a system for the magnetic non-destructive testing of materials for long and short defects. The system comprises a coil system for detecting short effects as seen in the longitudinal direction of the product and inducing a magnetic field in the product to be tested and a sensing means rotating arround the product and cooperating with said magnetic field for detecting long defects.

EP-A-0 315 887 discloses an eddy current flaw detecting apparatus and method comprising a pair of detection coils connected in adjoining arms of flaw detecting bridge circuit. The planes containing the coils are arranged parallel to each other and inclined at an angle between 75° and 85° to the axis of a fuel clad pipe to be examined. When a flaw is detected while the pipe is moved relative to the detection coils a characteristic curve between the flaw signal output and the turning angle is obtained to determine the circumferential and axial orientations of the flaw in comparison with characteristic curves between flaw signals and turning angels obtained in advance from standard flaw testing pieces.

EP-A-0 276 550 is also based on an eddy current flaw and discloses a method and apparatus for performing eddy current flaw inspection on workpiece material such as steel bar stock.

EP-A-0 301 906 discloses an other apparatus and method for providing a combined ultrasonic and eddy current inspection of a tube wherein the method includes correlations of the data generated by the ultrasonic probes with the data generated by the eddy current probe for determining th size, shape and nature of any flaw in the tube walls.

The present invention as defined in claims 1 and 28 addresses the deficiencies in prior art inspection systems, including those set forth above. Specifically, the method and apparatus disclosed herein are used to determine the extent of defects occurring in a tubular member, such as a section of tubing used in an oil or gas well, and visually display such defects in a greatly improved manner. A tubing inspection head detects the physical characteristics of a tubular member and generates an electrical signal corresponding thereto. Included in the physical characteristics are defects, and the corresponding electrical signals indicate the presence, angular orientation, and overall configuration of such defects. Additionally, longitudinal and circumferential position detectors generate signals indicating the longitudinal and circumferential position of the inspection head as it moves from one end of the tubular member to the other. A computer receives the signals generated by the inspection head and the longitudinal and circumferential position detectors, correlates the signals to obtain an accurate set of defect data including the size, configuration, orientation, longitudinal position, and circumferential position of every defect within the tubular member. Some or all of the defect data may then be displayed in a two-dimensional format on one or more visual display means.

The computer program utilized to process the signals and display the defect data provides a great deal of flexibility for the present invention. The degree to which the incoming signals are filtered may be selected as desired thus providing for a greater or lesser degree of accuracy as warranted by the situation. The computer program also provides the capability of selectively tailoring the visual display such that various kinds of defects may be emphasized or de-emphasized as desired.

Other advantages and features of the present invention will become more readily apparent from the following detailed description, when read in conjunction with the accompanying drawings, in which:
Figure 1 is a simplified, functional block diagram of the preferred embodiment of the system of the present invention;
Figure 2 is a simplified, functional, block diagram of the embodiment of Fig. 1, showing additional features of the preferred circumferential position detector;
Figure 3 is a strip chart representative of the defect displaying capability of prior art inspection systems;
Figures 4a-4d are examples of the preferred graphical and two-dimensional defect displays produced using principles of the present invention;
Figure 5 is an example of an alternative defect display in tabular form produced using principles of the present invention; and
Figures 6a-12 are a simplified flow chart of the main computer program and key subroutines which perform the signal processing functions for the preferred embodiment of the present invention.

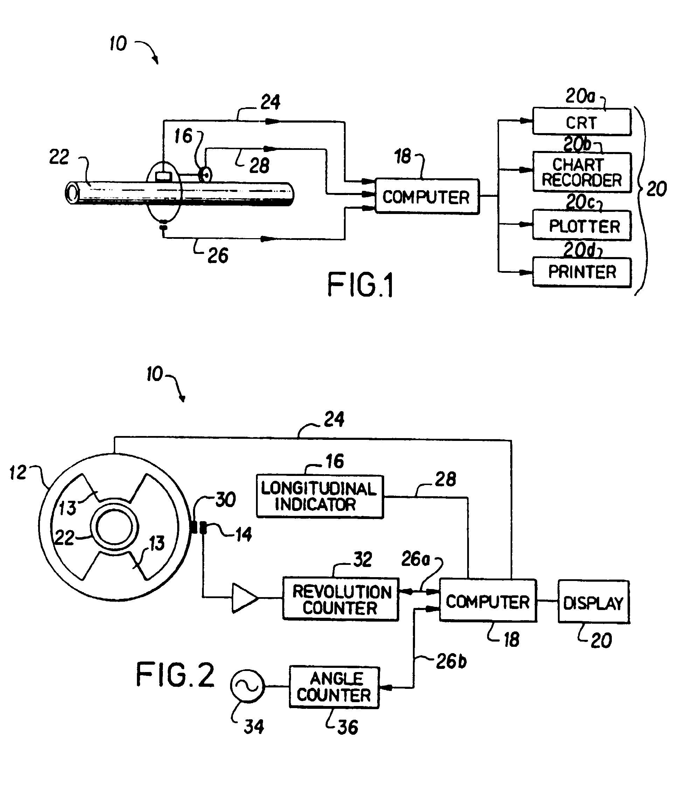

Figures 1 and 2 provide schematic depictions of the preferred system for carrying out principles of the present invention, with Figure 2 emphasizing certain features of the preferred apparatus. Referring initially to Figure 1, the principles disclosed herein are preferably embodied in system 10, which generally consists of inspection head 12, circumferential position detector 14, longitudinal position detector 16, a central processing unit or computer 18, and a variety of visual display devices collectively identified by the numeral 20. While it is preferred that system 10 include a CRT 20a, chart recorder 20b, plotter 20C, and printer 20d, it is only necessary for system 10 to include some form of visual display compatible for use with computer 18. It will be understood by those skilled in the art that any number of conventional visual display devices may be suitable for the purposes of the present invention.

As illustrated, system 10 may be effectively employed to accurately determine the extent of defects in a tubular member 22, an visually display the defects in great detail on display device 20. Tubular member 22 typically consists of a single section or joint of pipe associated with oil and gas wells. System 10 may also be incorporated into an on-site inspection facility, wherein an entire tubing string may be conveniently inspected during removal from the well bore. Regardless of whether system 10 is intended for on-site or off-site inspection, the most significant physical requirement is that tubular member 22 and inspection head 12 be movable relative to one another along the longitudinal axis of tubular member 22 to insure complete inspection of tubular member 22 from one end to the other. Typically, off-site inspection, system 10 would include inspection head 12 mounted in a laterally fixed position with tubular member 22 longitudinally movable therethrough by means of a conveyor. For on-site inspection, on the other hand, system 10 would have inspection head 12 vertically fixed above the well bore, and tubular member 22 would be drawn upwardly therethrough during removal from the bore.

During operation of system 10, inspection head 12 comprises the means for generating a defect signal 24, which includes a variety of information about the physical characteristics of tubular member 22. Included in this information are the identification and configuration of any and all defects located within the body of tubular member 22. At any given instant during the operation, inspection head 12 is generating a defect signal 24 representing the characteristics of a single discrete solid segment of tubular member 22. By suitably moving inspection head 12 from one end of tubular member 22 to the other, the content of defect signal 24 is broadened to include information regarding the entire solid volume of tubular member 22, the entire solid volume consisting of the aggregate sum of all discrete solid segments.

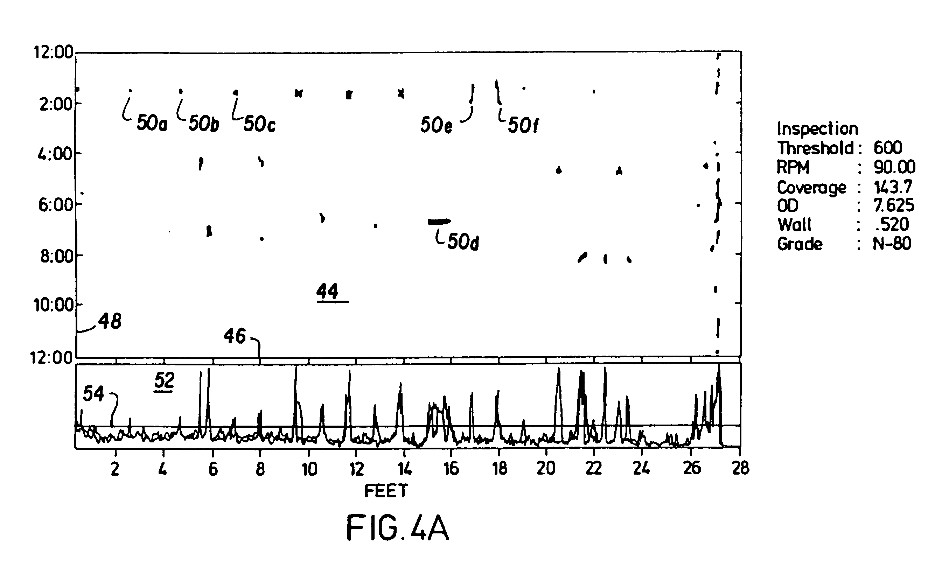

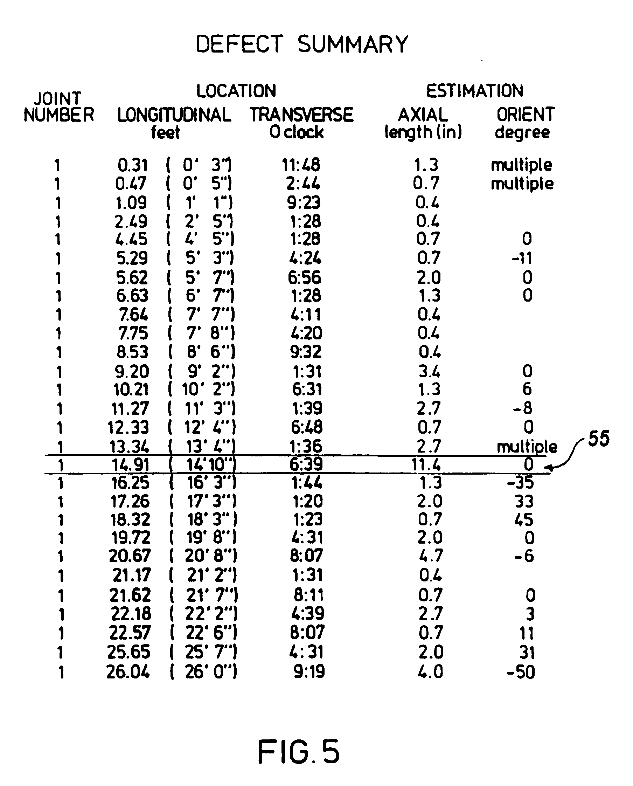

As inspection head 12 moves longitudinally relative to tubular member 22, circumferential position detector 14 and longitudinal position detector 16 generate circumferential signal 26 and longitudinal signal 28, respectively, which contain information indicating the location of the defects detected by inspection head 12. Signals 24, 26, and 28 are then directed into computer 18, which utilizes conventional microprocessor circuitry to correlate the signals, thus obtaining a useful set of data concerning the presence, configuration, angular orientation, and precise location of the defects within tubular member 22. This data, referred to herein as "defect data", is then displayed either in its entirety or in selected portions on one or more of the visual display devices 20. Illustrative examples of the visual display provided by the principles of the present invention are set forth in Figures 4a-4d and Figure 5.

Those skilled in the art will recognize that signals 24, 26, and 28 will be generated as analog signals of varying voltages, and must be converted to corresponding digital signals prior to processing by computer 18. It will also be understood that certain filtering networks may be employed in order to effect such conversions. High pass or low pass filters, however, are not necessary to segregate detect data from non-defect data within defect signal 24 due to the unique signal processing features of the present invention, discussed in greater detail below. Of course, defect signal 24 may be segregated by conventional band pass filters without departing from the scope of the present invention. As used herein, defect data relates to those irregularities which would result in the rejection of tubular member 22, while non-defect data relates to less severe irregularities, which would not result in such a rejection.

Since defect signal 24 generally contains an enormous volume of information, only a portion of which relates to actual defects, it is necessary to selectively reduce the volume of information so the memory capacity of computer 18 is not exceeded. Rather than applying a conventional low-pass filter to screen out the frequencies normally associated with non-defect irregularities, the present invention includes certain programming steps to enable computer 18 to distinguish defect information from non-defect information. After defect signal 24 has been digitized, the numerical values contained therein are compared by computer 18 to a threshold number selected by the user. The threshold is typically one and one-half times the average numerical value of digitized defect signal 24, but is may be varied as desired depending on the defect tolerances of the user. Computer 18 operates to discard all data having a numerical value less than the threshold, and record the remainder for further processing.

The present invention represents a unique combination of inspection head 12 with circumferential position detector 14 and longitudinal position detector 16, and the principles of this invention are intended to apply regardless of the precise embodiment of these components. In particular, inspection head 12 is preferably intended to be an electromagnetic detection device, such as that disclosed in U.S. Patent No. 4,710,712, but the teachings of this invention are equally applicable for use with a radiation inspection apparatus, an ultrasonic inspection apparatus, or any other inspection apparatus capable of generating a suitable defect signal 24. The interchangeability of various types of inspection heads will be fully appreciated by those skilled in the art.

The preferred apparatus for carrying out the principles of this invention includes two detector head segments 13, each of which contains twenty-four detecting coils and/or probes for detecting magnetic flux leakage. Therefore, defect signal 24 preferably consists of the multiplexed signals from forty-eight separate flux detectors, each of which is generating a signal, at any given instant, indicative of the defects in a separate discrete solid segment of tubular member 22. It is conceivable, however, that any number offlux detectors could be employed for the purposes disclosed herein. It is understood in the art that a large number of relatively small flux detectors effectively divides tubular member 22 into a greater number of discrete solid segments, thus improving the resolution of the visual display appearing on display device 20.

In the preferred embodiment of the present invention, circumferential position detector 14 is magnetic sensor which detects each rotation of inspection head 12, by means of magnet 30 which is secured thereto as illustrated in Figure 2. As such, position detector 14 serves as the sensing means for revolution counter 32, which simply provides computer 18 with a signal 26a indicating the passing of each revolution. To complete the information needed for determining circumferential position, clock 34 and angle counter 36 provide timing signal 26b which is conventionally combined with signal 26a by computer 18 to calculate the rotational position of inspection head 12 at any given instant. Computer 18 then correlates this information with the defect data transmitted by defect signal 24 and the longitudinal position transmitted by longitudinal signal 28 and displays the results on display devices 20 as set forth herein. For convenience and simplicity, revolution counter signal 26a and angle counter signal 26b are cumulatively referred to as circumferential signal 26.

Alternatively, circumferential position detector 14 may consist of any suitable apparatus for determining the circumferential position of the defect detector and generating a corresponding circumferential signal 26. It is expected that with certain "fixed-head" defect detectors, the circumferential position of defects will be indicated by the defect detector itself, and a separate circumferential position detector 14 may be eliminated altogether.

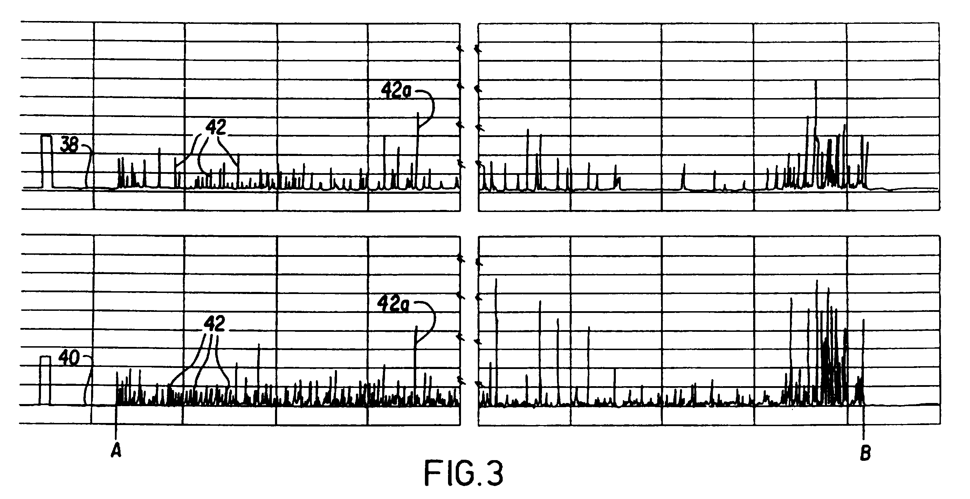

Longitudinal position detector 16 preferably consists of a wheel rotatably secured to a rigid support member such that its outer edge surface bears against the outer surface of tubular member 22. As the wheel of position detector 16 rolls longitudinally along the entire length of tubular member 22, a transducer connected to the wheel generates longitudinal signal 28 which generally corresponds to the distance traveled by the wheel, thus providing computer 18 with sufficient information to determine the longitudinal position of inspection head 12 and any defects detected thereby. To best illustrate the features and advantages of the present invention, it is helpful to start with a typical visual display as provided by the prior art. Figure 3 is a reproduction of such a display, as trip chart produced on a chart recorder by an electromagnetic inspection system utilizing two detector head segments in a rotating detector apparatus, each head segment generating a separate line on the graphic display. Horizontal axes 38 and 40 each contain a graphic indication of the signal generated by each of the two head segments, with the distance between points A and B corresponding generally to the length of the tubular member inspected. Vertical elements 42 indicate irregularities located within the body ofthe tubular member, with the longer elements such as peaks 42a, indicating the most likely presence of a defect. The location of peaks 42a along the horizontal axes 38 and 40 indicate the general longitudinal location of the defects, but the size, configuration, and angular orientation of the defects must be determined by visual inspection. Furthermore, the presence of defects must be visually determined as well, due to the high incidence of false readings and the inability to distinguish between true and false readings. The uncertainty in reading a conventional graphic display is compounded by the overlapping coverage provided by the two detector head segments as they rotate around the pipe.

While most of the tubing presently in use in the oil and gas industry contains no longitudinal seam, there will be occasions from time to time wherein welded tubing containing a longitudinal seam must be inspected. Conventional graphic displays have proven to be inadequate for displaying the results of such inspections, since the presence of the continuous longitudinal seam completely dominates the graphic display to the extent that the display is nothing but a continuous series of peaks which overshadow any indications of defects.

In stark contrast to the crude printout produced by prior art methods and devices, Figures 4a-d represent examples of the highly informative graphic displays made possible by the teachings of the present invention. The examples shown may either be observed on a CRT screen, or reproduced on a printer, plotter, or chart recorder. Referring initially to Figure 4a, it can be seen that the unique function of the present invention yields a two-dimensional map 44 of the defects located within tubular member 22. Preferably, map 44 includes a horizontal axis 46 corresponding generally to the longitudinal length of tubular member 22, and vertical axis 48 corresponding to the circumference of tubular member 22, with the graduation marks along vertical axis 48 signifying degrees of rotation from a preselected 12 o'clock position. For purposes of calibrating map 44 with tubular member 22, the twelve o'clock position is noted prior to inspection. Defect identifiers 50a-f indicate the presence, configuration, longitudinal position, and circumferential position of each defect located throughout tubular member 22. When viewed on a CRT screen, defect identifiers 50a-f constitute groups of one or more pixels.

For the sake of convenience and to suit the needs of a particular customer, the defect identifiers may be classified by the relative size of their corresponding defects. Accordingly, defect identifiers 50a, b and c indicate the presence of short defects, 50d indicates the presence of a long defect, and 50e and f indicate the presence of defects having angular orientations, or angle defects. The designations "short," "long," and "angle" are relative terms as used herein, and do not correspond to any particular absolute dimensions of size. The significance of these terms will become apparent in light of the additional features of the preferred embodiment as discussed below.

Positioned immediately beneath map 44 is graph 52, indicating a graphical representation of the signals received from the two head segments 13 of inspection head 12. Rather than indicating the analog signal as with prior art devices, graph 52 depicts the digitized version of defect signal 24 after processing by computer 18. As such, graph 52 is a much more accurate representation of the actual state of defects within tubular member 22.

In the preferred formats shown, the far right-hand side of the display contains certain information regarding the parameters of the procedure and the physical characteristics of the tubing being inspected. In addition to the display mode, this section indicates the threshold value for the display, the rotational velocity (in RPM's) of the inspection head 12, the percentage of coverage provided by the inspection head 12, and the outside diameter, wall thickness, and grade of tubular member 22. Of course, this section of the display may be altered as desired without departing from the principles of this invention.

In order to selectively filter out false or non-defect indications in map 44, graph 52 includes threshold line 54 which may be set or altered according to the particular needs of the customer. The threshold value represented by line 54 serves as a computer generated high pass filter which only allows those values greater than the threshold to appear as defect identifiers on map 44. In the preferred display shown, the threshold value setting is indicated with the information shown to the right of map 44 and graph 52.

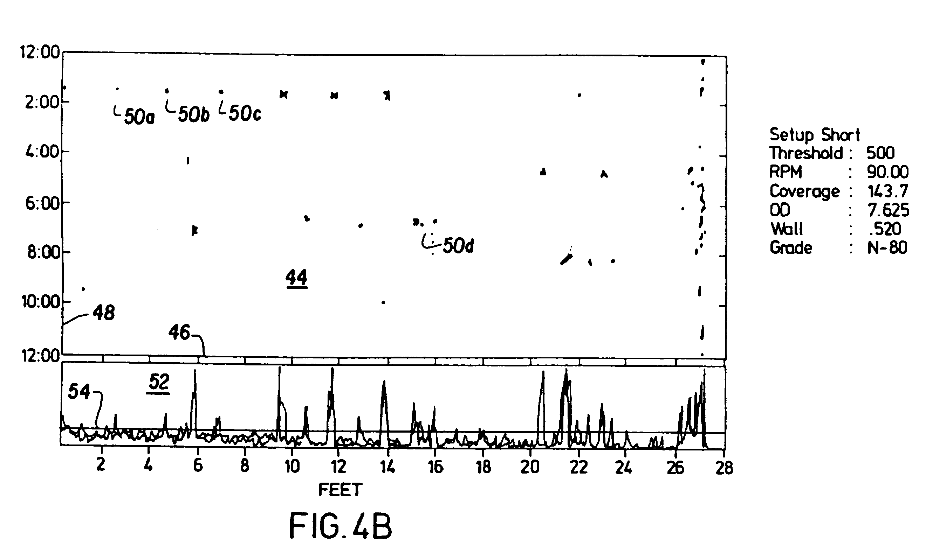

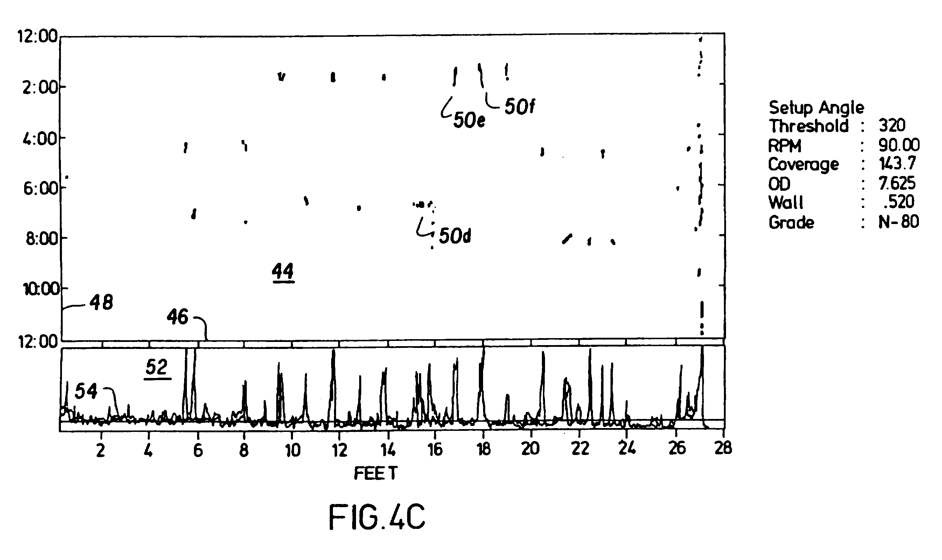

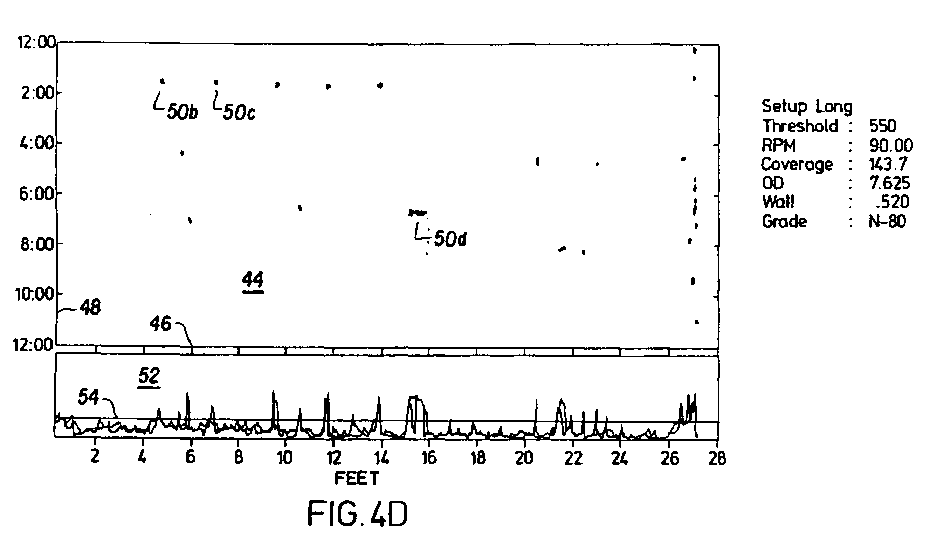

In addition to the threshold value setting, the information shown at the extreme right of Figures 4a-d includes the mode selected for the particular display. For the examples shown, Figure 4a represents a display in the inspection mode, Figure 4b represents the same display in the set up short mode, Figure 4c represents the same display in the set up angle mode, and Figure 4d represents the same display in the set up long mode. Essentially, Figure 4a is the cumulative version of Figures 4b, c, and d, in which short defects, long defects, and angle defects are given substantially equal prominence. In Figure 4b, on the other hand, the selection of the set up short mode by the user results in additional processing being performed by computer 18 so that short defects are emphasized, with long and angle defects being omitted or shown in distorted fashion. For example, in Figure 4b short defect identifiers 50a, b, and c, appear more clearly than in Figure 4a, whereas long defect identifier 50d appears in broken form and angle identifiers 50e and f do not appear at all. Similarly, in Figure 4c angle defect identifiers 50e and f are clearly displayed, but short defect identifiers 50a, b and c have disappeared and long defect identifier 50d appears broken. Finally, Figure 4d reveals how long defect identifier 50d is emphasized while short defect identifier 50a and angle defect identifiers 50e and f are not shown. The programming steps necessary to isolate the different types of defects and produce the different displays shown in Figures 4a-d provide a higher degree of defect identification than is presently known in the industry.

With the preferred embodiment of this invention, it is also possible to display the defect data in tabular form as shown in Figure 5. The table of Figure 5 includes four columns of information reflecting the physical characteristics of the defects in tubular member 22. The characteristic shown for each defect are the longitudinal position, the circumferential position, longitudinal or axial length, and the angular orientation. The presentation of defect data in this manner provides a convenient tool for assisting the inspection crew in visually locating each defect. In addition to the four columns of defect data, the preferred table also includes a fifth column headed "joint number" for identifying the section or joint of tubing being inspected, and a sixth column headed "comment" in which the inspection crew may record notes as desired.

To illustrate the convenience of the tabular display set forth in Figure 5, the appropriate line of data corresponding to long defect identifier 50d has been highlighted and designated by the numeral 55. Upon reading the defect data set forth in line 55, the inspection crew knows that a defect approximately 11.4 inches long may be found, starting at a point 14.91 ft. (or 14 ft. 10 in.) from the leading edge of pipe joint No. 1, located at circumferential position 6:39 and extending essentially parallel to the longitudinal axis of the tubular member. Armed with this knowledge, the inspection crew can relatively easily locate the defect corresponding to identifier 50d, and determine whether the affected section of tubing should be repaired or replaced.

As noted above, the table illustrated in Figure 5 includes a column specifying the angular orientation of each defect identified. The angular orientations calculated by computer 18 based upon information contained in defect signal 24, in combination with other known data. As inspection head 12 rotates around tubular member 22 at a constant rotational velocity, defect signal 24 indicates the presence of a plurality of discrete points which, when viewed in their entirety, indicate the presence of an angle defect such as those indicated at 50e and f shown in Figures 4a and c. Since an angle defect is, by definition, positioned at an angle with respect to the longitudinal axis of tubular element 22, the detection of two adjacent discrete points on a given angle defect will require slightly more, or slightly less, than one complete revolution of inspection head 12. This phenomenon results in a time differential, or time lag, between the detection of adjacent points on an angle defect and the period of rotation of inspection head 12. Computer 18, being pre-programmed with the rotational and longitudinal velocity of inspection head 12, can then apply conventional mathematical principles to determine the angular displacement of a first point from a second point on an angle defect, the angular displacement typically being determined with reference to the longitudinal axis of tubular member 22. The angular displacement between two discrete points on the defect is thus displayed in Figure 5 as the angular orientation of the defect.

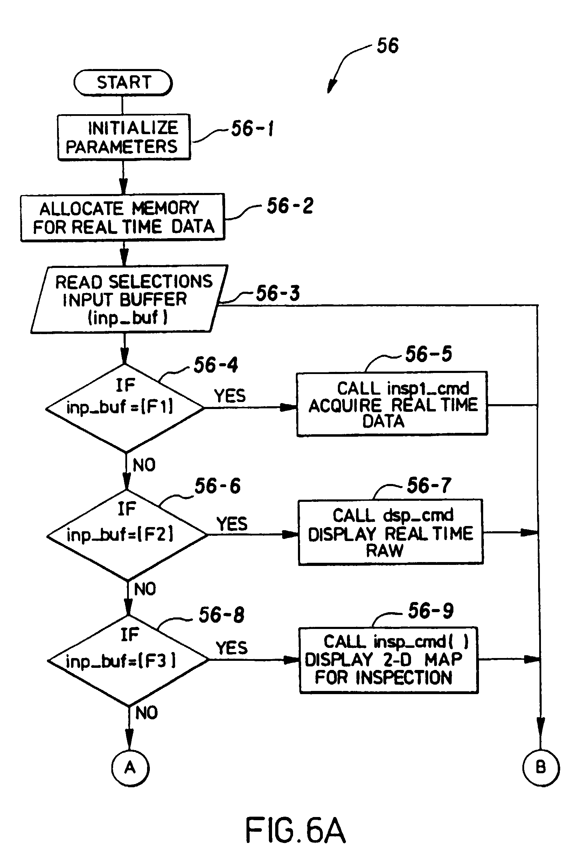

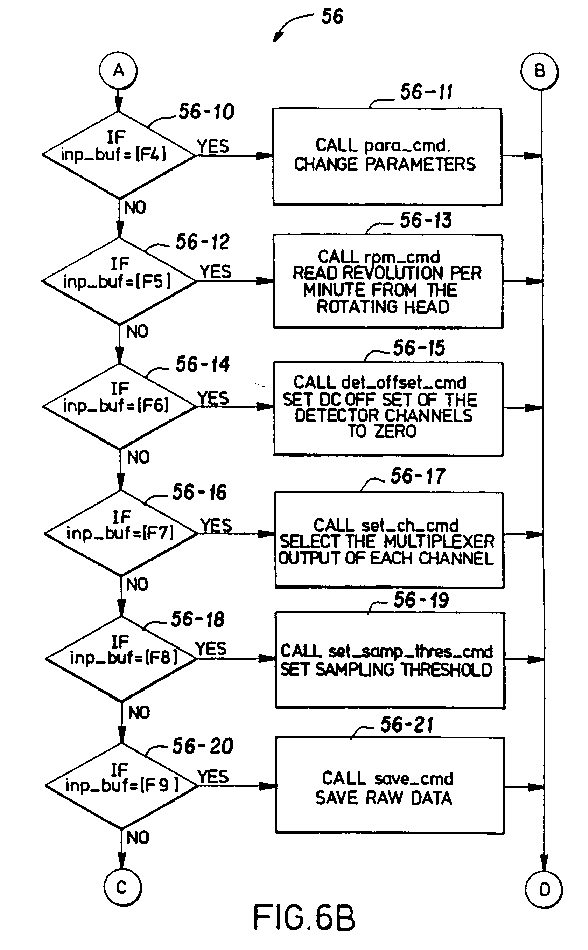

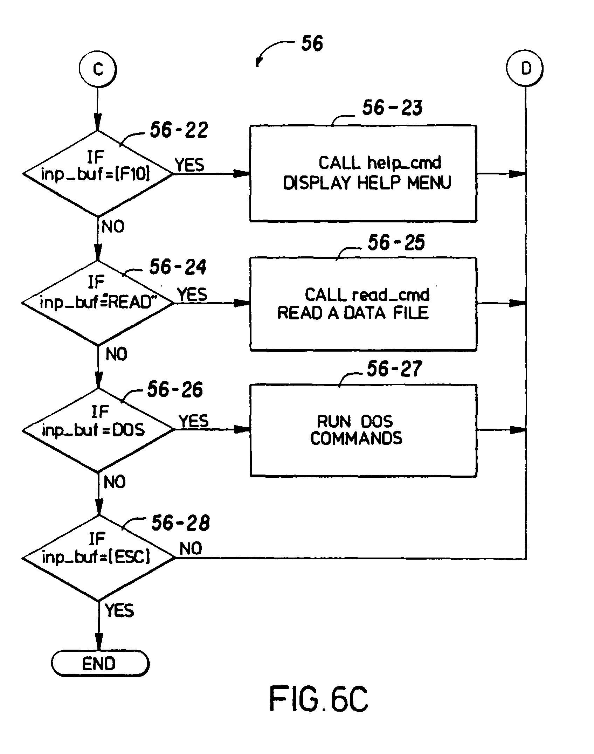

Figure 6a through Figure 12 illustrate a flow chart for the computer program developed to perform the various signal processing functions incorporated into the preferred embodiment of the present invention. While the illustrated flowchart describes the preferred software for carrying out the principles of this invention, it will be understood by those skilled in the art that substantial changes may be made in the computer program without departing from the scope of the invention.

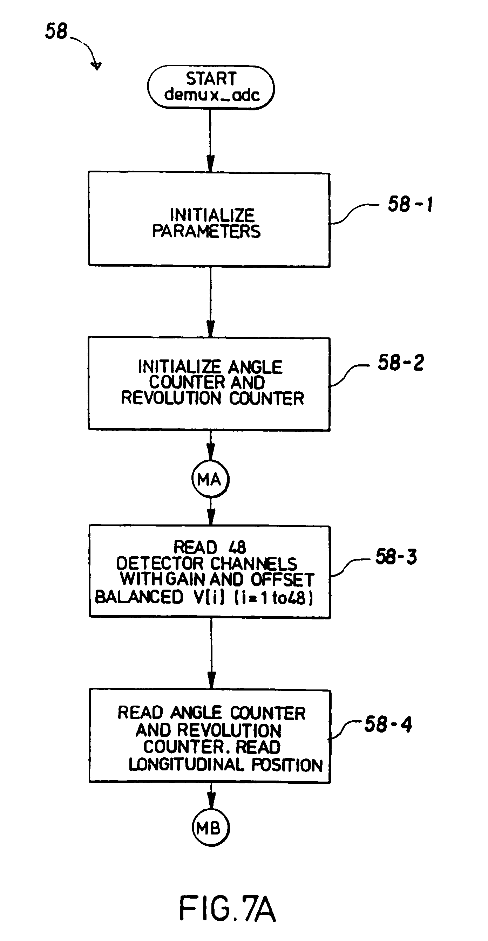

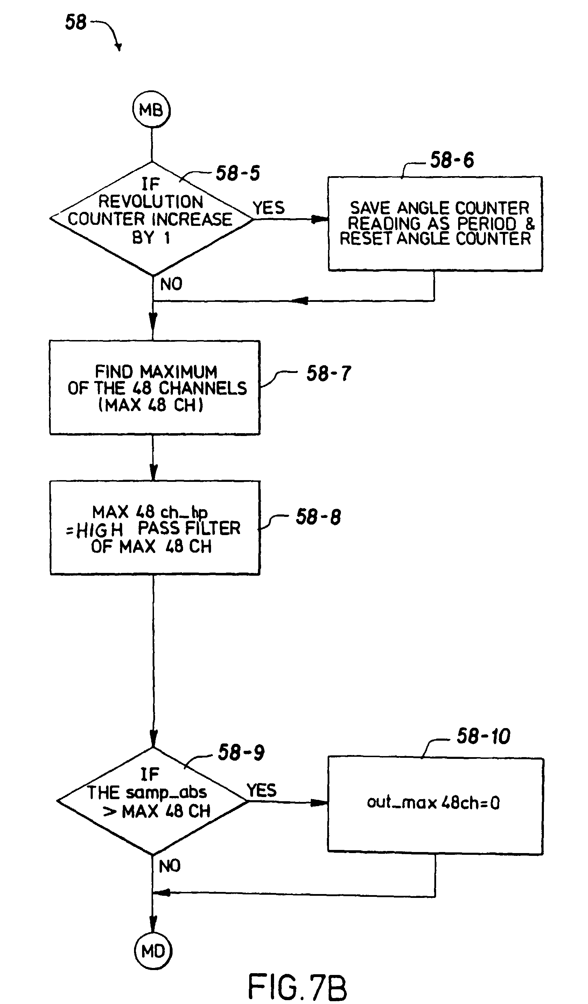

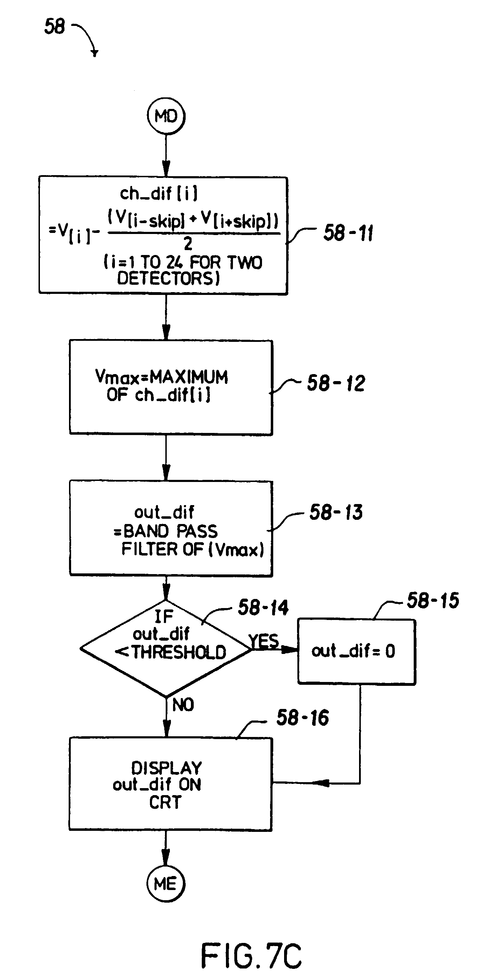

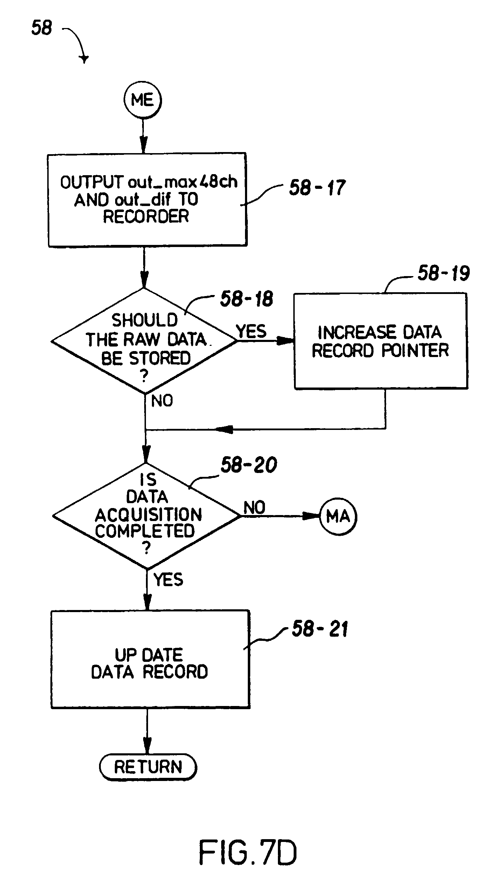

As disclosed herein, the flowchart depicting the preferred program consists of a main program illustrated in Figures 6a-c, and six key subroutines illustrated by Figures 7a-d, Figure 8, Figures 9a-e, Figure 10, Figures 11a-b, and Figure 12. A general description of each of these sections is set forth below, followed by a more detailed discussion of the preferred program.

Figures 6a-c represent the main program which sets up the overall framework work for preforming the processing tasks necessary to receive, process, and display data as discussed herein. The main program flowchart 56 illustrates the preferred sequence for identifying the various parameters involved in the procedure, allocating sufficient memory to store the necessary data, and assigning a subroutine or other function to be performed by certain function keys.

Figures 7a-d set forth flowchart 58 which represents a subroutine identified as "demux_adc." The function of the demux_adc program is to enable the computer 18 to receive and store information contained in defect signal 24, circumferential signal 26, and longitudinal signal 28. The preferred program set forth in flowchart 58 is designed to accommodate a defect signal 24 comprising 48 separate channels, corresponding to the 48 defect detectors included in the preferred apparatus.

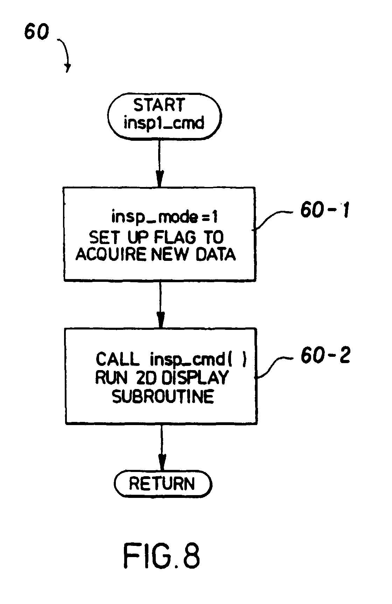

Figure 8 contains flowchart 60 which represents the "inspl_cmd" (inspection command) subroutine. This subroutine operates to retrieve the defect data from storage and display the data in the inspection mode as illustrated in Figure 4a and discussed above.

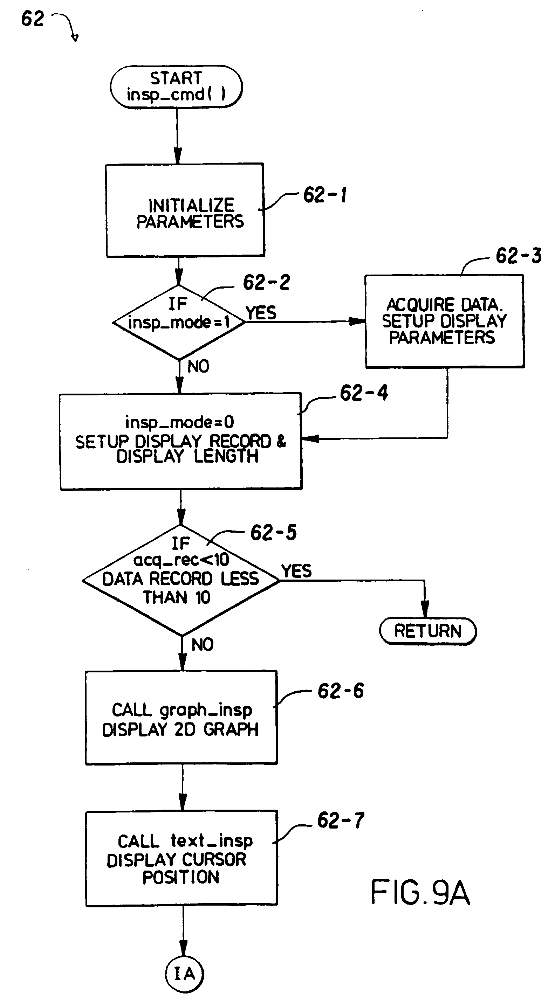

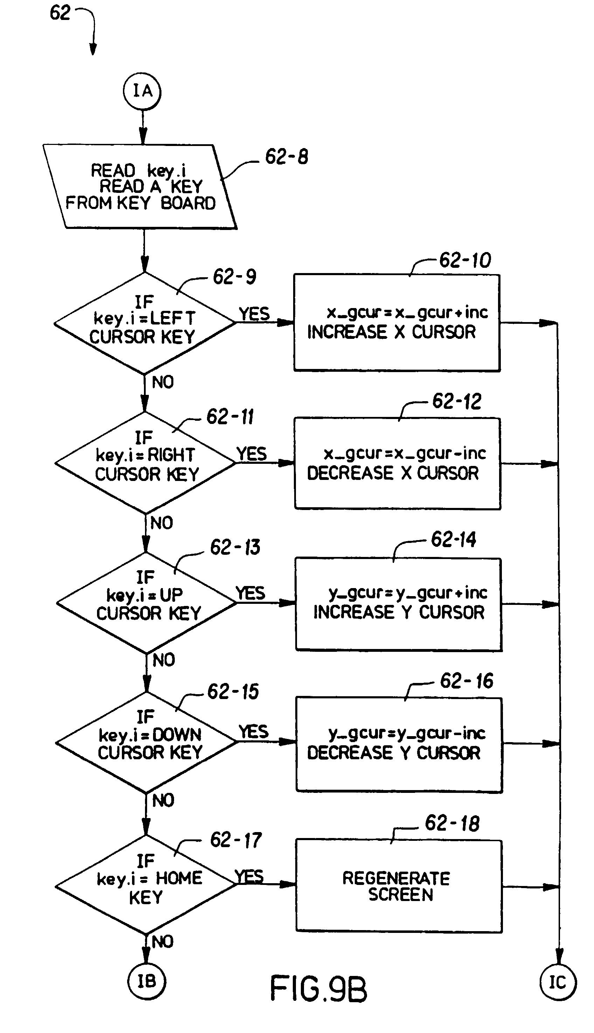

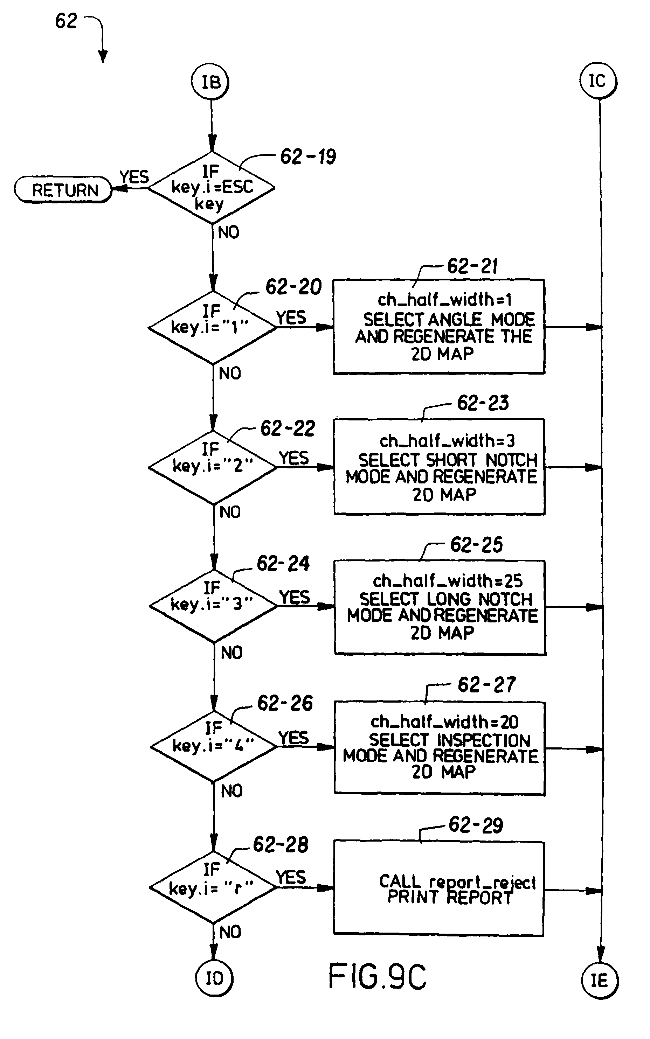

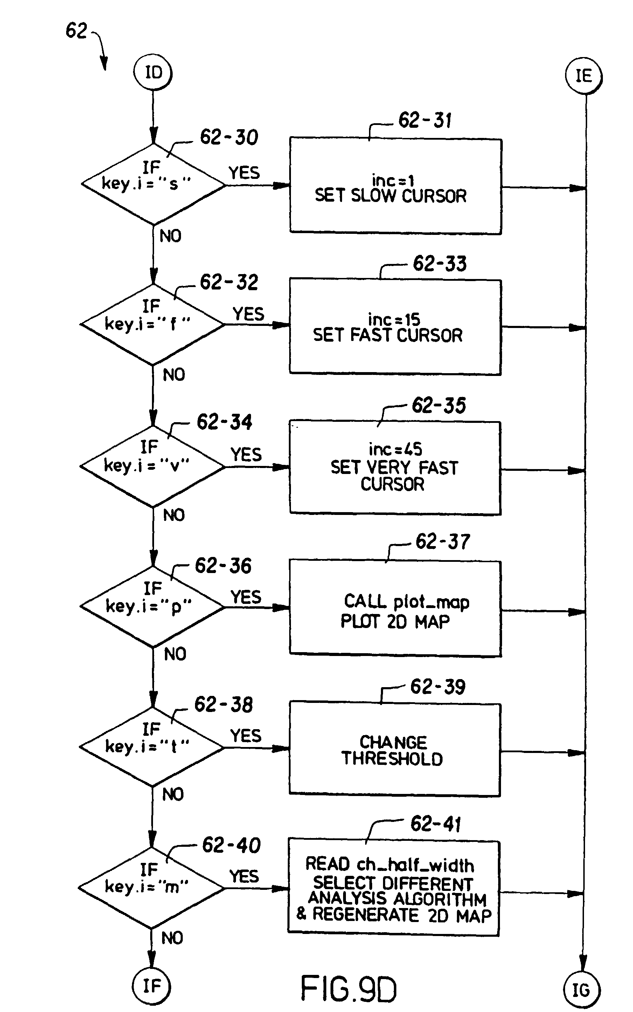

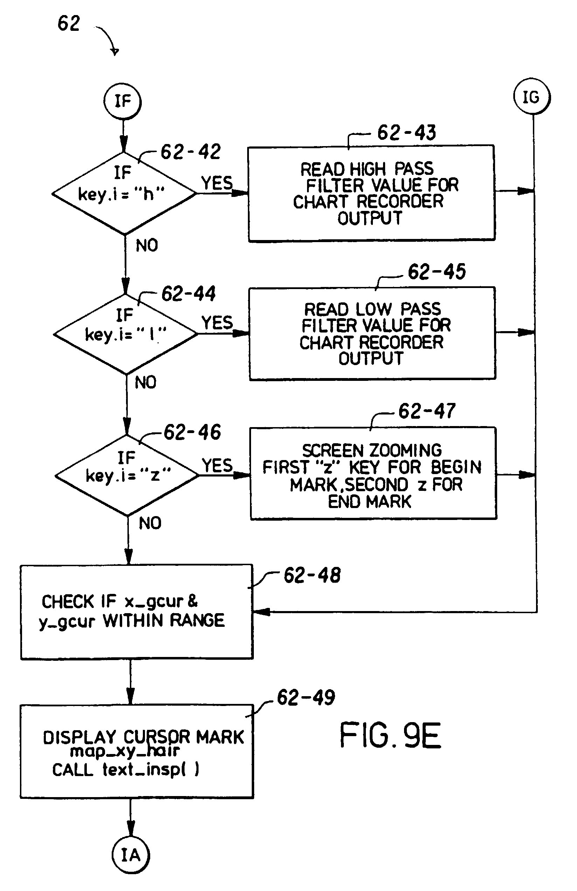

Flowchart 62, as shown in Figures 9a-e, disdoses a subroutine labeled "insp_cmd()." This portion of the program allows the user of the system to select either short, long, angle, or inspection modes for the two-dimensional display, as discussed above, and also to enhance the display for specified portions when desired. The "insp_cmd()" subroutine utilizes the cursor, appearing as the point of intersection between perpendicularx and y axes, to focus on any given point appearing on the two-dimensional display. By selectively moving the x and y axes so that the cursor coincides with a given defect, the user can determine the precise longitudinal and circumferential position of the defect on the two-dimensional map.

The "insp_cmd()" subroutine identified by flowchart 62 also provides a "screen zooming" feature which yields an enlarged display of a portion of the two-dimensional map, as mentioned above. This feature allows the user to view a particular longitudinal section of tubular member 22 in greater detail simply by designating the longitudinal boundaries of the relevant section. For example, if the user desires to see an exploded view of a central portion of tubular member 22 lying between 10 feet and 20 feet, the user can make appropriate designations at the 10 and 20 foot points and the computer program will expand that portion of the display to fill the entire two-dimensional map.

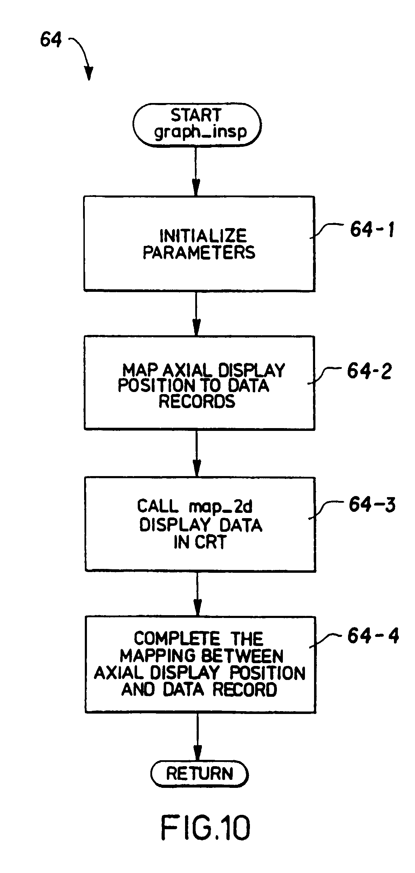

The subroutine entitled "graph_insp," identified by flowchart 64 in Figure 10, serves the linking function of correlating the longitudinal position of the defect data with the corresponding position on the two-dimensional map for purposes of carrying out "screen zooming." Additionally, this subroutine calls a "map_2d" subroutine into play to display the defect data on a CRT screen.

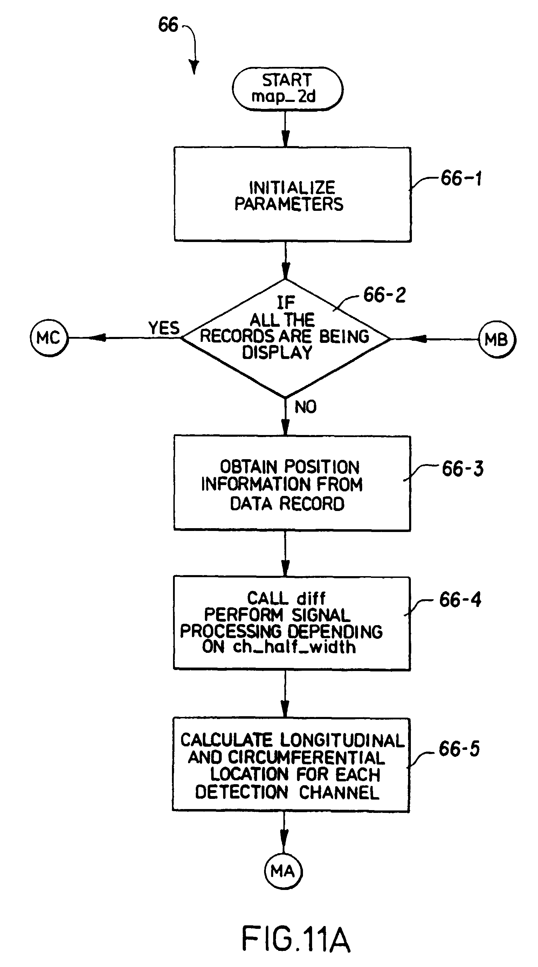

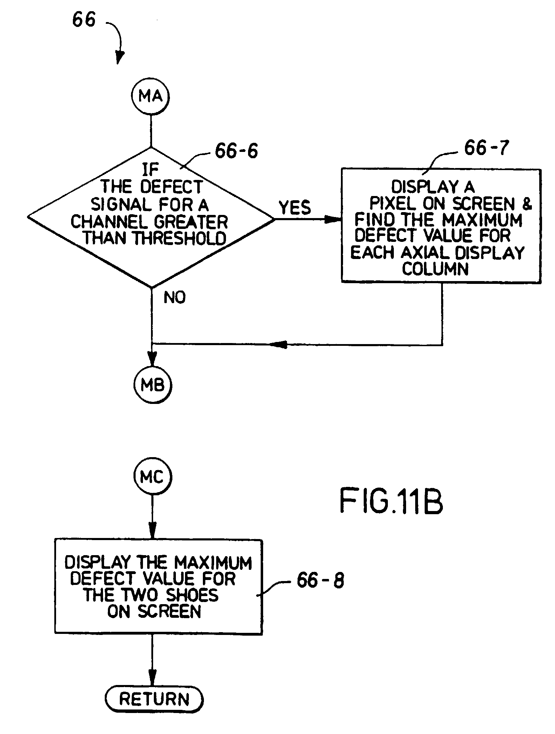

The "map_2d" subroutine mentioned above is disclosed in flowchart 66 illustrated in Figures 11a and b. This subroutine operates to correlate the defect, longitudinal, and circumferential signals to determine the position of each defect, and generate a pixel on the CRT screen to visually display each defect in its proper location. When creating the visual display, this subroutine calls upon the "diff" subroutine which adjusts the display according to the mode (short, long, angle, or inspection) selected by the user.

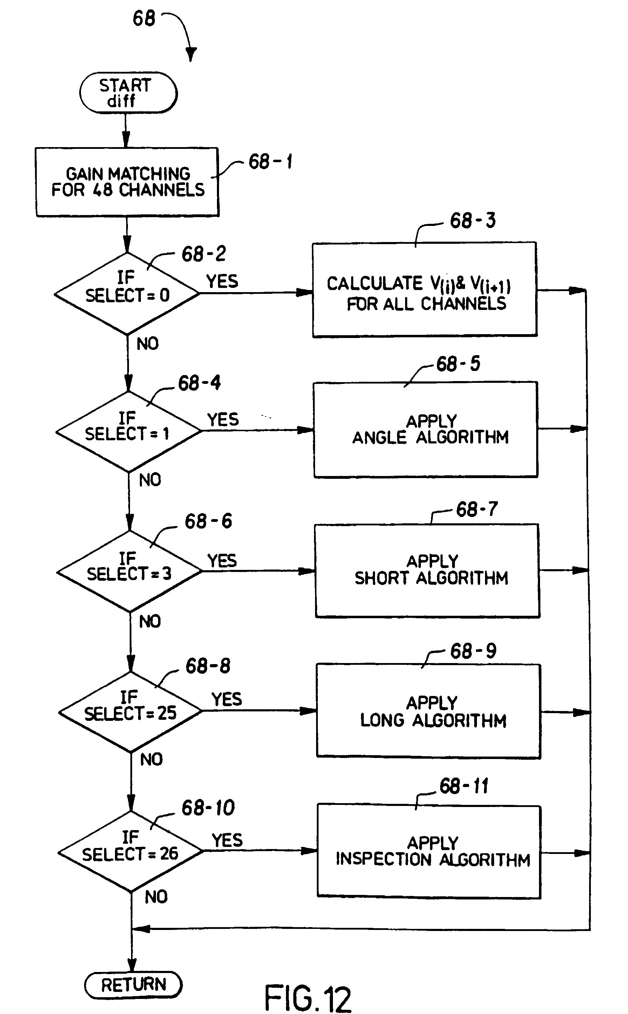

Flowchart 66 illustrated in Figure 12 sets forth the framework for the "diff" subroutine mentioned above. This subroutine performs the signal processing functions necessary to distinguish the various types of defects based upon size and angular orientation, thus providing for the different display modes discussed herein.

In order to carry out the principles of the present invention utilizing the preferred program for this purpose, identified schematically as flowchart 56, the first step is to initialize the parameters governing the process (box 56-1). At this stage in the inspection procedure, the user establishes the various operating frequencies and threshold values needed for subsequent calculations. Also established at this stage are the pipe speed, detector gain, inspection head rotational velocity, and the length, outside diameter, and wall thickness of the pipe to be inspected. After all necessary operating parameters have been established, a sufficient block of memory is allocated to store the real time data input from signals 24, 25, and 28 (box 56-2).

Once the internal functions and parameters have been initialized and the memory is properly allocated, the main program instructs the computer to run various subroutines and functions in response to certain entries (box 56-3). The operations automatically performed upon selection of function keys F1-F10 are assigned as follows:
F1 calls the inspl_cmd subroutine, displayed in Figure 8 as flowchart 60, which assigns a flag value to indicate the acquisition of new data and further calls the insp_cmd() subroutine for generating the two-dimensional display (boxes 56-4 and 56-5);
F2 calls a dsp_cmd subroutine which simply displays the raw real time data (boxes 56-6 and 56-7);
F3 calls the inspl_cmd subroutine, illustrated as flowchart 60 in Figure 8 which generates the two-dimensional display map for inspection (boxes 56-8 and 56-9);
F4 calls a para_cmd subroutine which allows the user to change the parameters as desired (56-10 and 56-11);
F5 calls an rpm_cmd subroutine which displays the rotational velocity of the rotating inspection head 12 (56-12 and 56-13);
F6 calls the det_offset_cmd subroutine which allows the user to set the required offset for each detector channel (56-14) and 56-15);
F7 calls a set_ch_cmd subroutine which allows the user to select the multiplexer output value for each detector channel (boxes 56-16 and 56-17);
F8 calls a set_samp_phres_cmd subroutine which allows the user to set the sampling threshold (boxes 56-18 and 56-19);
F9 calls the save_cmd subroutine which operates to save the data received through input signals 24, 26 and 28 (boxes 56-20 and 56-21);
F10 calls the help_cmd subroutine which generates a help menu on the screen (boxes 56-22 and 56-23);
"Read" command calls the read_cmd subroutine which allows the user to read raw data directly from the file (boxes 56-24 and 56-25);
"DOS" command sets the computer up to perform conventional DOS commands (boxes 56-26 and 56-27); and
the "ESCAPE" key returns the computer to DOS format (box 56-28).

The order ofthe steps performed by the main program illustrated in flowchart 56 constitutes a convenient, logical progression for creating the framework for the overall programming including all subroutines. It will be understood by those skilled in the art, however, that the precise order of steps is, in many instances, simply a matter of choice, and may be rearranged considerably without departing from the teachings of the present invention.

The demux_adc subroutine, illustrated by flowchart 58 in Figures 7a-d, constitutes the heart of the signal processing features, wherein signals 24, 26, and 28 are received and stored. As with virtually any computer program, the first step comprises initializing the parameters necessary for performing the operations specified by the remainder of the subroutine (box 58-1). In addition to the parameters previously selected for the main program, the demux_adc subroutine further requires the initialization of the values corresponding to the revolution counter signal 26a and angle counter signal 26b (box 58-2).

The demux_adc subroutine next directs the computer to read the defects signal 24 for each of the 48 detector channels, with gain and offset balanced (box 58-3), as well as revolution counter signal 26a, angle counter signal 26b, and longitudinal signal 28 (box 58-4). The period of rotation for inspection head 12 is then established by determining the angle counter reading corresponding to a single revolution of tool trip head 12 (boxes 58-5 and 58-6).

The demux_adc subroutine then performs the signal processing functions necessary for the real time screen output and chart recorder output. Initially, the maximum value of the forty-eight channels comprising defect signal 24 is determined (box 58-7) and processed by a digital high pass filter(box 58-8). If the maximum value is less than the pre-set threshold value, the output maximum value (out_max 48 ch) is set at zero (boxes 58-9 and 58-10). The signal difference for each flux detector is then established (boxes 58-111 and 58-12), with the maximum value being processed by a digital band pass filter (box 58-13). If the resulting value (out_dif) is less than a given threshold, the value is set at zero (boxes 58-14 and 58-15).

After the out_max 48 ch and out_dif parameters have been determined, the amplitude of out_dif is displayed on the CRT screen in real time (box 58-16), and the values of both parameters are converted into analog signals and sent to a two channel strip chart recorder (box 58-17). The computer then determines if the raw data should be stored by discarded (boxes 58-18 and 58-19), and the data acquisition sequence is continued, if necessary, with the data record being updated accordingly (boxes 58-20 and 58-21).

The inspl_cmd subroutine referred to above is identified by flowchart 60 set forth in Figure 8. this subroutine serves initially to assign a value of 1 to the insp_mode variable "inspect mode," and create a flag to signal the acquisition of new data (box 60-1). this is a preliminary step essential to the operation of the insp_cmd() subroutine which is called into play by the inspl_cmd (box 60-2) as set forth in more detail below.

The insp_cmd(), identified generally as subroutine 62, requires that additional parameters be initialized before performing the operation specified therein (box 62-1). Next, relying upon an instruction previously supplied by the inspl_cmd subroutine, new data is automatically acquired if the insp_mode value equals 1 (boxes 62-2 and 62-3). Regardless of whether or not new data is acquired, the insp_mode is reset to zero and a suitable display record is set up to indicate the length of tubing corresponding to the required data (box 62-4). The computer next determines if all the acquired data records ("acq_rec") have been received and, if not, the user is instructed to depress the F1 key to acquire new data (box 62-5). If all data has been received, the graph_insp subroutine is called to generate a two-dimensional map and display the records thereon (box 62-6).

The next series of operations performed by the insp_cmd() subroutine provide the on screen focusing feature which allows the user to pinpoint the location of the defects appearing on the two-dimensional map. After all the data is properly displayed on the two-dimensional display, the text_insp subroutine is called and the cursor position is shown as the intersection between x and y axes (box 62-7). The user is then able to accurately position the cursor by moving the x and y axes by depressing the correct key on the keyboard (box 62-8).

In the preferred embodiment illustrated, the "left cursor" key serves to move the x axis left (boxes 62-9 and 62-10), the "right cursor" key moves the x axis right (boxes 62-11 and 62-12), the "up cursor key moves the y axis upwardly (boxes 62-13 and 62-14) and the "down cursor" key moves the y axis downwardly (boxes 62-15 and 62-16).

Finally, the user has the option of regenerating the screen simply by depressing the "HOME" key (boxes 62-17 and 62-18), or exiting the subroutine by depressing the "ESCAPE" key (box 62-19).

The insp_cmd() subroutine allows the user to vary the display mode between short, long, angle, and inspection modes, and regenerate the two-dimensional map accordingly, as discussed above. The program assigns a numerical entry corresponding to each different mode, as follows: if the numeral "1" is entered, the two-dimensional map is regenerated in the angle mode (boxes 62-20 and 62-21); if the numeral "2" is entered, the map is regenerated as the short mode (boxes 62-22 and 62-23); if the numeral "3" is entered, the map is regenerated in the long mode (boxes 62-24 and 62-25); and if the numeral "4" is entered, the map is regenerated in the inspection mode (boxes 62-26 and 62-27).

This subroutine also assigns functions to various letters of the alphabet to provide additional features which may be helpful to the user of the system. As illustrated, the selection of the letter "R" calls a report_reject subroutine which generates the defect summary shown in Figure 5 (boxes 62-28 and 62-29). Selection of the letters "S", "F", or "V" varies the speed of the cursor movement from slow, to fast, to very fast, respectively (boxes 62-30 through 62-35).

Selection of the letter "P" instructs the computer to pot the two-dimensional display map on an attached plotter (boxes 62-36 and 62-37). If the user desires to change the threshold value to increase or decrease the amount of information being displayed, the letter "T" may be selected (boxes 62-38 and 62-39). Entry of the letter "M"" allows the user to select a completely different analysis algorithm, assign a corresponding channel half width value (ch_half_width), and regenerate the two-dimensional display map in accordance with the new algorithm (boxes 62-40 and 62-41).

The user of system 10 can quickly check the high pass and low pass filter values for the digital filters included in the chart recorder output by entering either the letter "H" or "L", respectively (boxes 62-42 through 62-45). Finally, by entering the letter "Z", the user can utilize the screen zooming feature discussed above, wherein the first "Z" entry marks the initial longitudinal boundary and the second "Z" entry marks the final longitudinal boundary for enlarged view (boxes 62-46 and 62-47).

In order to avoid confusion and erroneous displays, the insp_cmd() subroutine automatically checks the positions of the x and y axes to insure that both are within the range of the two-dimensional display shown on the screen (box 62-48). In the event that one or more of the previously described functions has been performed, thus temporarily removing the two-dimensional display map, the cursor is then redisplayed as the intersection of x and y axes (box 62-49).

The graph_insp subroutine referenced at box 62-6 is illustrated as flowchart 64 in Figure 10. Additional parameters must first be initialized (box 64-1) in order for the computer to perform the correlating functions of this subroutine. After the necessary parameters have been established, the axial, or longitudinal, display positions on the CRT screen are correlated to the defect data points contained in the data records for purposes of the screen zooming feature discussed above (box 64-2). After this correlation, or mapping, procedure has begun, the map_2d subroutine is called upon to display the data on the CRT screen (box 64-3) while the correlation continues until completed (box 64-4).

The map_2d subroutine referred to above is illustrated as flowchart 66 in Figures 11a and b. As with certain other subroutines, this portion of the program requires that new parameters be initialized before any additional processing is performed (box 66-1). The processing functions of this subroutine are essentially contained within a logic loop, wherein the computer first determines if all the records are being displayed (box 66-2) and, if so, the maximum defect value for each of the two detector head segments 13 is displayed on the screen (box 66-8).

If the computer determines that all records are not yet being displayed, it proceeds by first obtaining additional position information from the data records (box 66-3). The diff subroutine is next called upon to apply suitable algorithms to the raw data, thus generating four sets of distinctive values, with each set corresponding to one of the four display modes, short, long, angle, or inspection (box 66-4). The longitudinal and circumferential location for each of the forty-eight detector channels are next determined by correlating signals 24, 26, and 28 (box 66-5).

The predetermined threshold value for the particular display mode selected is compared to each numerical value comprising defect signal 24 and, if the signal value is greater than the threshold value, a pixel is displayed on the CRT screen for the maximum defect value for each longitudinal position along the length of tubular member 22, as displayed on the two-dimensional map (boxes 66-6 and 66-7). If, on the other hand, the defect signal value is less than the threshold value, the signal value ignored and the logic loop repeated.

The final key portion of the preferred program for this invention is the diff subroutine identified by flowchart 68 in Figure 12. Since the function of this program is to process all numerical values contained within defect signal 24, it is imperative that the gain setting be matched for each of the forty-eight channel corresponding to the forty-eight separate flux detectors (box 68-1). The computer then performs one of five possible calculations depending upon the channel half width selected by the user.

If the selection is "0", the voltages for all channels are calculated for each discrete solid segment of tubular member 22 (boxes 68-2 ad 68-3). If, however, a channel half width of 1, 3, 25, or 26 is selected, the voltage values are processed according to the angle algorithm, short algorithm, long algorithm, or inspection algorithm, respectively, to generate the distinctive values needed to produce the four different display modes discussed above (boxes 68-4 and 68-11).

The precise programming steps required to reproduce the preferred embodiment of the present invention will become apparent to those skilled in the art upon disclosure of the flowchart and the remainder of the specification set forth herein.

## Claims

1. A method of detecting and mapping defects in a tubular member (22) comprising:
scanning said tubular member by detecting means monitoring a plurality of discrete segments extending over the entire length of said tubular member (22) to generate a signal (24) which may include signal portions representing a defect in at least one discrete segment of said tubular member (22),
generating a longitudinal signal (28) indicating the longitudinal position of said at least one discrete segment of said tubular member (22);
generating a circumferential signal (26a, 26b) indicating the circumferential position of said at least one discrete segment of said tubular member (22);
correlating said defect (24), longitudinal (28), and circumferential signals (24, 28, 26a, 26b) to obtain defect data, said defect data including the longitudinal position and circumferential position of said defect in said at least one discrete segment of said tubular member (22),
**characterized by**
processing said defect data in order to classify said defects into different types in dependence on the shape, length and angular orientation, thereof, and
supplying said processed defect data to a display means (20) for selectively displaying the presence and the position of a selected one of said different types of defects on a two-dimensional map (44), said map including:
a first axis (46) corresponding to the length of said tubular member (22),
a second axis (48) corresponding to the circumference of said tubular member (22),
wherein defects of said selected defect type are displayed as identification, images emphasizing said selected defect type at the expense of other defect types.

2. The method of claim 1 wherein as an additional facility the relative number and positions of said identification images with respect to said first and second axes (46, 48) indicate the location of all of said defect types (50a, 50b... ) on said tubular member (22) and further indicate said shape, length, and angular orientation of each of said plurality of defects relative to said tubular member (22) and to each other of said plurality of defects (50a, 50b,...).

3. The method of claim 1 or 2 wherein said defect signal, said longitudinal signal, and said circumferential signals comprise analog electrical signals, said method further characterized by the step of displaying simultaneously said amplitude values of said at least one defect signal (50a, 50b,...) separately from said two dimensional map (44) of said plurality of defects.

4. The method of claim 1 or 2 wherein said characteristics are displayed in a table (Figure 5) having at least four portions, characterized by:
a first portion for displaying the longitudinal position of said defect,
a second portion for displaying the circumferential position of said defect,
a third portion for displaying the longitudinal length of said defect, and
a fourth portion for displaying the angular orientation of said defect.

5. The method of any of claims 1 to 3 wherein the step of displaying at a display means is characterized by displaying said defect data on a visual monitor (20a) operative to selectively receive continuously generated electronic pulses and convert said electronic pulses to visual images.

6. The method of any of claims 1 to 3 wherein the step of displaying is characterized by displaying said defect on a chart recorder (20b).

7. The method of any of claims 1 to 3 wherein the step of displaying is characterized by plotting said defect data on a plotter (20c).

8. The method of any of claims 1 to 3 wherein the step of displaying said defect data is characterized by printing said defect data on a printer (20d).

9. The method of any of claims 1 to 3 wherein said amplitude of said at least one defect signal is displayed on a display (52) separate from said two dimensional map (44) but which is axially aligned with said two-dimensional map (44).

10. The method of claim 1 wherein said two dimensional map (44) being defined by a plurality of pixels, and wherein each of said at least one defect signal represents a pixel on said two-dimensional map (44).

11. The method of claim 1 characterized by said two dimensional map (44) being defined by a plurality of pixels, and wherein each of said at least one defect signal constitutes a pixel on said two-dimensional map (44), and represents the presence of said defect in a particular discrete segment of said tubular member (22).

12. The method of claim 1 wherein said plurality of defects include a plurality of defects of differing lengths, only a subset of defects of predetermined length value are emphasized on said two dimensional map (44) and all other defects are not emphasized.

13. The method of Claim 1 wherein said plurality of defects (50a, 50b,...) include a plurality of defects (50a, 50b,...) of differing lengths, and wherein said step of displaying is characterized by:
selectively displaying the presence of said defects in the following alternative modes:
a long defect mode (Figure 4d) in which only defects having a length above a predetermined length value are emphasized on said two dimensional map (44) and all other defects are not emphasized; and
a short defect mode (Figure 4b) in which only defects having a shortness below a predetermined length value are emphasized on said two-dimensional map (44) and all other defects are not emphasized.

14. The method of claim 1 or 13 wherein said plurality of defects include a subset of angular defects out of axial alignment with the longitudinal central axis of said tubular member (22) by a predetermined angular threshold, wherein the step of displaying is characterized by selectively displaying the presence of said defect includes an angular defect mode (Figure 4c) in which only said subset of angular defects out of axial alignment with said central longitudinal axis by said predetermined angular value are emphasized on said two-dimensional map (44) and all other defects are not emphasized.

15. The method of claim 1 or any of claims 12 to 14 wherein said plurality of defects is displayed in a full defect mode (Figure 4a) in which said first subset of long defects, said second subset of short defects, and said third subset of angular defects are simultaneously displayed on said two-dimensional map (44).

16. The method of Claim 1 wherein said step of generating at least one defect signal is characterized by:
generating a magnetic flux in said tubular member (22);
detecting with said magnetic flux in a plurality of discrete solid members of said tubular member (22);
producing from said detected magnetic flux at least one signal (24) representing a defect in at least one discrete solid segment of said tubular member (22) for each of said plurality of defects, each of said at least one defect signal having an amplitude value; and
recording said amplitude value for each of said at least one defect signal.

17. The method of claim 1 or 16 wherein said step of generating at least one defect signal is characterized by: recording into a memeory of a computer (18) an amplitude value for each of said at least one defect signal; and distinguishing with said computer (18) said plurality of differing types of defects.

18. The method of Claim 16 or 17 wherein said step of displaying further comprises:
selecting at least one signal threshold (54);
comparing said at least one signal threshold (54) to said amplitude value of each of said at least one defect signal to create a subset of datapoints ready for display; and
displaying only said subset of datapoints to indicate the presence of said plurality of defects on said two-dimensional map (44).

19. The method of Claim 1 wherein said step of displaying comprises:
selecting with a computer (18) at least one signal threshold (54);
comparing with said computer (18) said at least one signal threshold (54) to a amplitude value of each of said at least one defect signal to create a subset of data-points ready for display; and
displaying only said subset of datapoints to indicate the presence of said plurality of defects on said two-dimensional map (44).

20. The method of of any of claims 1 to 3 or 5 to 19 further characterized by selectively displaying only a portion of said two-dimensional map (44).

21. The method of claim 20 further characterized by displaying and simultaneously enlarging said portion of said two dimensional map (44).

22. The method of Claim 16 wherein said step of displaying is characterized by:
selecting at least one signal threshold (54);
comparing said at least one signal threshold (54) to said amplitude value of each at least one defect signal to create a subset of datapoints ready for display; and displaying said subset of data-points to indicate the presence of said plurality of defects on said two-dimensional map (44).

23. The method of claim 1 characterized by the steps of:
detecting the presence of a plurality of discrete points on said defect;
comparing said discrete points to a common frame of reference, thus establishing the relative position of each of said discrete points with respect to the remainder of said plurality of discrete points; and
correlating said relative position of each of said discrete points with the longitudinal orientation of said tubular member, thus determining the angular orientation of said plurality of discrete points with respect to said longitudinal axis of said tubular member.

24. The method of Claim 23 further characterized by the step of displaying at a display means said angular orientation of said plurality of discrete points.

25. The method of Claim 23 wherein said step of detecting the presence of a plurality of discrete points on said defect is characterized by generating a plurality of signals indicative of said plurality of discrete points, wherein each of said discrete points is represented by one corresponding signal; and processing said signals to establish the position of each of said discrete points indicated by each of said signals.

26. The method of Claim 23 wherein said step of comparing said discrete points to a common frame of reference is characterized by:
establishing the point in time at which each of said signals indicates the presence of a corresponding discrete point;
measuring the time lag separating the detection of each adjacent discrete point on said defect; and
applying said time lag to calculate the relative position of each of said adjacent discrete points.

27. The method of Claim 23 further comprising the steps of generating a time signal, wherein said step of detecting the presence of a plurality of discrete points on said defect is characterized by:
generating a first signal indicative of a first discrete point;
generating a second signal indicative of a second discrete point; and
said step of comparing said discrete points to a common frame of reference comprises calculating the time lag between said first and second signals.

28. An apparatus for detecting and mapping defects in a tubular member (22) comprising :
scanning means arranged to scan said tubular member by detecting means monitoring a plurality of discrete segments extending over the entire length of said tubular member,
means (12) arranged to generate signals (24) which may include signal portions representing a defect in at least one discrete segment of said tubular member (22),
means (16) arranged to generate a longitudinal signal (28) indicating the longitudinal position of said at least one discrete segment of said tubular member (22),
means (14) arranged to generate a circumferential signal (26a, 26b) indicating the circumferential position of said at least one discrete segment of said tubular member (22),
means arranged to correlate said defect, longitudinal, and circumferential signals (24, 28, 26a, 26b) to obtain defect data, said defect data including the longitudinal position and circumferential position of said defects in said at least one discrete segment of said tubular member (22); characterised by
processing means arranged to process said defect data such as to classify said defects into different types in dependence on the shape, length and angular orientation thereof, and
display means (20) arranged to selectively display the presence and position of a selected one of said different types of defects based on said defect data on a two-dimensional map (44) said map including:
a first axis (46) corresponding to the length of said tubular member (22);
a second axis (48) corresponding to the circumference of said tubular member (22);
wherein defects of said selected defect type are displayed as identification images emphasizing said selected defect type at the expense of other defect types.

29. The apparatus of claim 28 wherein said means for generating at least one defect signal comprise an electromagnetic inspection apparatus (12), characterized by:
at least one driven coil for inducing a magnetic field in said discrete segment of said tubular member (22),
at least one pick-up coil for detecting the magnetic field induced by said driven coil, and
at least one magnetic flux detector, responsive to the variations in said flux caused by defects and generating a signal corresponding thereto.

30. The apparatus of claim 28 wherein said means for generating a longitudinal signal characterized by:
a generally rigid support member disposed adjacent said tubular member (22);
a wheel (16) rotatably secured to said support member, wherein the outer perimeter of said wheel is in contact with the outer surface of said tubular member (22) while said apparatus is operating, such that longitudinal movement of said tubular member (22) relative to said apparatus causes corresponding rotational movement of said wheel (16); and
signal generating means communicating with said wheel for generating a signal (28) corresponding to the distance traveled by said wheel (16) along the outer surface of said tubular member (22).

31. The apparatus of claim 28 wherein said means for generating a circumferential signal are characterized by sensing means for detecting the position of said defect signal generating means relative to said tubular member (22); and means for generating a signal indicating said relative position.

32. The apparatus of Claim 28, characterized by:
said defect signal generating means comprising a generally annularly-shaped, rotatable defect detector having an open interior of sufficiently large diameter to allow said tubular member (22) to pass axially therethrough,
said defect detector (12) being rotatably mounted within said apparatus such that said tubular member (22) is passable through said open interior of said defect detector during rotation thereof; and
said sensing means comprising:
a position indicator (30) rigidly secured to said defect detector (12) and rotatable therewith,
a stationary sensor (14), cooperating with said position indicator (30), for detecting each revolution of said defect detector (12) and generating a revolution signal indicative thereof;
clock means for generating a time signal, and computing means (18) for receiving and correlating said revolution signal and said time signal, and selectively determining the circumferential position of said defect detector relative to said tubular member (22) at any given time.

33. The apparatus of Claim 28, characterized by said means for correlating said defect, longitudinal, and circumferential signals being a computer.

34. The apparatus of Claim 28, characterized by said display means comprising at least one of the following:
(a) a CRT screen (20a);
(b) a chart recorder (20b);
(c) a plotter (20c); or
(d) a printer (20d)-

35. The apparatus of Claim 28 wherein said display means (20) is operable in a plurality of display modes, each for displaying a different type of defect.

36. The apparatus of Claim 28, characterized by said display means displaying said defects in a length defect mode (Figure 4d) in which only a subset of defects of predetermined length value are emphasized and all other defects are not emphasized.

37. The apparatus of to Claim 28 wherein said display means display defects in the following alternative modes: a long defect mode (Figure 4d) in which only defects having a length above a predetermined length value are emphasized and all other defects are not emphasized; and a short defect mode (Figure 4b) in which only defects having a length below a predetermined shortness value are emphasized and all other defects are not emphasized.

38. The apparatus of Claim 28 or 37 wherein said display means display said defects additionally in a full defect mode (Figure 4a) in which said first subset of long defects, said second subset of short defects, and said third subset of angular defects are simultaneously displayed on said two-dimensional map (44).

39. The apparatus of claim 28 characterized by:
sensor means arranged to detecte the presence of a plurality of discrete points on said defect;
means cooperating with said sensor means for generating at least one signal indicative of said plurality of discrete points; and
means arranged to process (18) said at least one signal to determine the relative position of each of said plurality of discrete points with respect to said longitudinal axis of said tubular member (22), wherein said relative position of each of said plurality of discrete points corresponds to the angular orientation of said defect with respect to said longitudinal axis.

40. The apparatus of Claim 39 further comprising clock means for generating a time signal, characterized by said processing means comprising a computer (18) for receiving and correlating said time signal and said at least one signal indicative of said plurality of discrete points, wherein said relative position of each of said plurality of discrete points is determined by establishing the time lag within said at least one signal indicative of adjacent discrete points and applying said time lag to calculate the longitudinal and circumferential spacing between said adjacent discrete points.

41. The apparatus of Claim 39 further comprising clock means for generating a time signal, characterized by said sensor means comprises at least one first sensor for detecting the position of a first discrete point, and at least one second sensor for detecting the position of a second discrete point; and said signal generating means comprises a first means for generating a first signal indicative of said first discrete point, and second means for generating a second signal indicative of said second discrete point; wherein said processing means measures the time lag between said first and second signals, thus determining the relative positions of said first and second discrete points with respect to said longitudinal axis.

## Patentansprüche

1. Methode zur Feststellung und Darstellung von Fehlern in einem Rohrelement (22) umfaßend:
Abtasten des Rohrelementes durch eine Detektoreinrichtung, die eine Vielzahl von diskreten Segmenten überwacht, welche sich über die gesamte Länge des Rohrelementes (22) erstrecken, um ein Signal (24) zu erzeugen, welches Signalteile umfassen kann, die einen Fehler in mindestens einem diskreten Segment des Rohrelementes (22) darstellen,
Erzeugen eines Longitudialsignales (28), welches die Longitudinalposition des mindestens einen diskreten Segments des Rohrelementes (22) anzeigt;
Erzeugen eines Umfangsignals (26a, 26b), welches die Umfangsposition des mindestens einen diskreten Elementes des Rohrelementes (22) anzeigt;
Korrelieren des Fehlersignals (24), des Longitudinalsignals (28) und des Umfangsignale (24, 28, 26a, 26b), um Fehlerdaten zu erhalten, wobei die Fehlerdaten die Longitudinalposition und die Umfangsposition des Fehlers in dem mindestens einen Segments des Rohrelementes (22) einschließt,
**gekennzeichnet durch,**
Verarbeitung der Fehlerdaten, um die Fehler in verschiedene Typen in Abhängigkeit von derer Formen-, Längen- oder Winkelorientierung zu klassifizieren, und Zuführung der verarbeiteten Fehlerdaten zu einer Anzeige-Vorrichtung 20 zum selektiven Anzeigen der Anwesenheit und der Position eines ausgewählten Typs der verschiedenen Typen von Fehlern in einer zweidimensionalen Karte (44), wobei die Karte umfaßt:
eine erste Achse (46), entsprechend der Länge des Rohrelementes (22),
eine zweite Achse (48), entsprechend dem Umfang des Rohrelementes (22),
wobei die Fehler des ausgewählten Fehlertyps angezeigt werden als Identifizierungsbilder, welche den ausgewählten Fehlertyp im Vergleich zu den anderen Fehlertypen hervorheben.

2. Methode nach Anspruch 1, worin als eine zusätzliche Charakterisierung die relative Anzahl und Positionen der Identifizierungsbilder in Bezug zur ersten und zweiten Achse (46, 48) den Ort aller Fehlertypen (50a, 50b...) des Rohrelementes (22) anzeigen und weiterhin die Form-, Länge- und Winkelorientierung jedes der Vielzahl von Fehlern relativ zum Rohrelement (22) und zueinander aus der Vielzahl von Fehlern (50a, 50b...) anzeigen.

3. Methode nach Anspruch 1 oder 2, worin das Fehlersignal, das Longitudinalsignal und die Umfangsignale analoge elektrische Signale umfassen, wobei die Methode weiterhin gekennzeichnet ist durch den Schritt des gleichzeitigen Anzeigens der Amplitudenwerte des mindestens einen Fehlersignals (50a, 50b...) getrennt von der zweidimensionalen Karte (44) der Vielzahl von Fehlern.

4. Methode nach Anspruch 1 oder 2, worin die Charakteristiken in einer Tabelle (Figur 5) angezeigt werden, die mindestens vier Teile aufweist, gekennzeichnet durch
einen ersten Teil zum Anzeigen der Longitudinal-position des Fehlers,
einen zweiten Teil zum Anzeigen der Umfangsposition des Fehlers,
einen dritten Teil zum Anzeigen der longitudinalen Länge des Fehlers, und
einen vierten Teil zum Anzeigen der Winkel-orientierung des Fehlers.

5. Methode nach einem der Ansprüche 1 bis 3, worin der Schritt des Anzeigens auf einer Anzeigeeinrichtung dadurch gekennzeichnet ist, daß die Fehlerdaten auf einem Sichtmonitor (20a) angezeigt werden, welcher selektiv die kontinuierlich erzeugten elektronischen Impulse empfängt und diese elektronischen Impulse in visuelle Bilder umsetzt.

6. Methode nach einem der Ansprüche 1 bis 3, worin der Schritt des Anzeigens gekennzeichnet ist durch das Anzeigen der Fehler auf einem Aufzeichnungsgerät (20b).

7. Methode nach einem der Ansprüche 1 bis 3, worin der Schritt des Anzeigens gekennzeichnet ist durch Aufzeichnen der Fehlerdaten auf einem Plotter (20c).

8. Methode nach einem der Ansprüche 1 bis 3, worin der Schritt des Anzeigens der Fehlerdaten gekennzeichnet ist durch Drucken der Fehlerdaten auf einem Drucker (20d).

9. Methode nach einem der Ansprüche 1 bis 3, worin die Amplitude des mindestens einen Fehlersignals auf einem Anzeiger (52) getrennt von der zweidimensionalen Karte (44), aber axial ausgerichtet mit der zweidimensionalen Karte (44) angezeigt wird.

10. Methode nach Anspruch 1, worin die zweidimensionale Karte (44) definiert wird durch eine Anzahl von Pixels und worin jede des mindestens einen Fehlersignals ein Pixel auf der zweidimensionalen Karte (44) darstellt.

11. Methode nach Anspruch 1, dadurch gekennzeichnet, daß die zweidimensionale Karte (44) definiert wird durch eine Anzahl von Pixels, und worin jeder des mindestens einen Fehlersignals ein Pixel auf der zweidimensionalen Karte (44) bildet und die Anwesenheit des Fehlers in einem bestimmten diskreten Segment des Rohrelementes (22) wiedergibt.

12. Methode nach Anspruch 1, worin die Vielzahl von Fehlern eine Vielzahl von Fehlern mit verschiedener Länge umfaßt, wobei nur eine Untermenge der Fehler mit bestimmtem Längenwert auf der zweidimensionalen Karte (44) hervorgehoben wird und alle anderen Fehler nicht hervorgehoben werden.

13. Methode nach Anspruch 1, worin die Vielzahl von Fehlern (50a, 50b...) eine Vielzahl von Fehlern (50a, 50b...) von verschiedener Länge umfaßt, und worin der Schritt des Anzeigens gekennzeichnet ist durch:
selektives Anzeigen der Anwesenheit von Fehlern in den folgenden alternativen Betriebsarten:
ein Langfehlermodus (Figur 4d), in welchem nur Fehler mit einer Länge über einem vorbestimmten Längenwert auf der zweidimensionalen Karte (44) hervorgehoben werden und alle anderen Fehler nicht hervorgehoben werden; und
ein Kurzfehlermodus (Figur 4b), in welchem nur die Fehler mit einer Länge unter einem vorbestimmten Längenwert auf der zweidimensionalen Karte (44) hervorgehoben werden und alle anderen Fehler nicht hervorgehoben werden.

14. Methode nach Anspruch 1 oder 13, worin die Vielzahl von Fehlern eine Untermenge von Winkelfehlern umfaßt, die außerhalb eines vorbestimmten Winkelschwellenwert der axialen Ausrichtung mit der zentralen Längsachse des Rohrelementes (22) liegen, und worin der Schritt des Anzeigens gekennzeichnet ist durch selektives Anzeigen der Anwesenheit dieser Fehler einschließlich eines Winkelfehlermodus (Figur 4c), in welchem nur die Untermenge dieser Winkelfehler außerhalb der axialen Ausrichtung mit der zentralen Längsachse um einen vorbestimmten Winkelwert auf der zweidimensionalen Karte (44) hervorgehoben werden und alle anderen Fehler nicht hervorgehoben werden.

15. Methode nach Anspruch 1 oder einem der Ansprüche 12 bis 14, worin die Vielzahl von Fehlern in einem Vollfehlermodus (Figur 4a) angezeigt werden, in welchem die erste Untermenge der langen Fehler, die zweite Untermenge der kurzen Fehler und die dritte Untermenge der Winkelfehler gleichzeitig auf der zweidimensionalen Karte (44) angezeigt werden.

16. Methode nach Anspruch 1, worin der Schritt des Erzeugens von mindestens einem Fehlersignal gekennzeichnet ist, durch:
Erzeugen eines magnetischen Flusses in dem Rohrelement (22);
Detektieren mit dem magnetischen Fluß in einer Vielzahl von diskreten Festelementen des Rohrelementes (22);
Erzeugen von dem detektierten magnetischen Fluß mindestens ein Signal (24), welches ein Fehler in mindestens einem diskreten Festsegment des Rohrelementes (22) für jede der Vielzahl von Fehlern wiedergibt, wobei jeder des mindestens einen Fehlersignals einen Amplitudenwert aufweist; und
Aufzeichnen des Amplitudenwerts für jeden des mindestens einen Fehlersignals.

17. Methode nach Anspruch 1 oder 16, worin der Schritt des Erzeugens des mindestens einen Fehlersignals gekennzeichnet ist durch:
Einschreiben in einen Speicher eines Computers (18) einen Amplitudenwert für jedes des mindestens einen Fehlersignals; und
Unterscheiden mit dem Computer (18) die Vielzahl von verschiedenen Fehlertypen.

18. Methode nach Anspruch 16 oder 17, worin der Schritt des Anzeigens weiterhin umfaßt:
Auswahl von mindestens einem Signalschwellenwert (54);
Vergleich des mindestens einem Signalschwellenwertes (54) mit dem Amplitudenwert von jedem des mindestens einen Fehlersignals, um eine Untermenge von Datenpunkten zu erzeugen, die für die Anzeige vorgesehen sind, und
Anzeigen von nur der Untermenge der Datenpunkte, um die Anwesenheit einer Vielzahl von Fehlern in der zweidimensionalen Karte (44) anzuzeigen.

19. Methode nach Anspruch 1, worin der Schritt des Anzeigens umfaßt:
Auswahl mit einem Computer (18) von mindestens einem Signalschwellenwert (54);
Vergleich mit dem Computer (18) des mindestens einen Signalschwellenwertes (54) mit einem Amplitudenwert für jeden des mindestens einen Fehlersignals, um eine Untermenge von Datenpunkten für die Anzeige zu erzeugen; und
Anzeigen von nur einer Untermenge von Datenpunkten, um die Anwesenheit einer Vielzahl von Fehlern auf der zweidimensionalen Karte (44) anzuzeigen.

20. Methode nach einem der Ansprüche 1 bis 3 oder 5 bis 19 weiterhin gekennzeichnet durch die selektive Anzeige von nur einem Teil der zweidimensionalen Karte (44).

21. Methode nach Anspruch 20, weiterhin gekennzeichnet durch die Anzeige und die gleichzeitige Vergrößerung dieses Teils der zweidimensionalen Karte (44).

22. Methode nach Anspruch 16, worin der Schritt des Anzeigens gekennzeichnet ist durch:
Auswahl von mindestens einem Signalschwellenwert (54);
Vergleich des mindestens einen Signalschwellenwertes (54) mit dem Amplitudenwert von jedem des mindestens einen Fehlersignals, um eine Untermenge von Datenpunkten für die Anzeige zu erzeugen; und Anzeige der Untermenge der Datenpunkte um die Anwesenheit einer Vielzahl von Fehlern auf der zweidimensionalen Karte (44) anzuzeigen.

23. Methode nach Anspruch 1 gekennzeichnet durch die Schritte:
Anzeigen der Anwesenheit einer Vielzahl von diskreten Punkten auf diesen Fehlern;
Vergleich der diskreten Punkte mit einem gemeinsamen Bezugsrahmen, wodurch die relative Position der diskreten Punkte in Bezug zu den verbleibenden der Vielzahl der diskreten Punkte ermittelt wird; und
Korellieren der relativen Position von jedem der diskreten Punkte mit der longitudinalen Orientierung des Rohrelementes, wodurch die Winkelorientierung der Vielzahl von diskreten Punkten mit Bezug auf die Längsachse des Rohrelementes bestimmt wird.

24. Methode nach Anspruch 23 weiterhin gekennzeichnet durch den Schritt des Anzeigens bei einer Anzeigeeinrichtung der Winkelorientierung der Vielzahl von diskreten Punkten.

25. Methode nach Anspruch 23, worin der Schritt des Detektierens der Anwesenheit einer Vielzahl von diskreten Punkten auf den Fehler gekennzeichnet ist durch Erzeugen einer Vielzahl von Signalen, welche eine Vielzahl von diskreten Punkten anzeigen, worin jeder diskrete Punkt dargestellt ist durch ein entsprechendes Signal und verarbeitende Signale, um die Position von jedem der diskreten Punkte, der durch jedes dieser Signale angezeigt wird, festzustellen.

26. Methode nach Anspruch 23, worin der Schritt des Vergleichens der diskreten Punkte mit einem gemeinsamen Bezugsrahmen gekennzeichnet ist durch:
Ermitteln des Zeitpunkts, zu welchem die Signale die Anwesenheit eines entsprechenden diskreten Punktes anzeigen;
Messen der Zeitverzögerung, welche die Detektierung von benachbarten diskreten Punkten auf dem Defekt trennt;
Verwenden der Zeitverzögerung, um die relative Position von jedem der benachbarten diskreten Punkte zu berechnen.

27. Methode nach Anspruch 23, weiterhin umfaßend die Schritte des Erzeugens eines Zeitsignals, worin der Schritt des Detektierens der Anwesenheit einer Vielzahl von diskreten Punkten auf den Fehlern gekennzeichnet ist durch:
Erzeugen eines ersten Signals, welches einen ersten diskreten Punkt anzeigt;
Erzeugen eines zweiten Signals, welches einen zweiten diskreten Punkt anzeigt;
wobei der Schritt des Vergleichens der die dikreten Punkte mit einem gemeinsamen Bezugsrahmen die Berechnung der Zeitverzögerung zwischen dem ersten und zweiten Signal umfaßt.

28. Gerät zur Feststellung und Darstellung von Fehlern in einem Rohrelement (22) umfaßend:
Abtasteinrichtung zum Abtasten des Rohrelementes durch eine Detektoreinrichtung, welche eine Vielzahl von diskreten Segmenten überwacht, welche sich über die gesamte Länge des Rohrelementes erstrekken;
Einrichtung (12) zum Erzeugen von Signalen (24), welche Signalteile umfassen, die einen Fehler in mindestens einem diskreten Segment des Rohrelementes (22) widergeben,
Einrichtung (16) zum Erzeugen eines Longitudinalsignals (28), das die Longitudinalposition des mindestens einen diskreten Segmentes des Rohrelementes (22) anzeigt,
Einrichtung (14) zum Erzeugen eines Umfangsignals (26a, 26b), welches die Umfangsposition des mindestens einen diskreten Elementes des Rohrelementes (22) anzeigt,
Einrichtung zum Korrelieren des Fehlers, der Longitudinal- und der Umfangsignale (24a, 28a, 26a, 26b), um Fehlerdaten zu erhalten, wobei die Fehlerdaten die Longitudinalposition und Umfangsposition der Fehler in dem mindestens einen diskreten Segment des Rohrelementes (22) umfassen, **gekennzeichnet durch:**
Verarbeitungseinrichtung zum Verarbeiten der Fehlerdaten wie ein Klassifizieren der Fehler in verschiedene Typen in Abhängigkeit von derer Formen-, Längen- und Winkelorientierung, und
Anzeigeeinrichtung (20) zum selektiven Anzeigen der Anwesenheit und der Position eines gewählten der verschiedenen Typen von Fehlern basierend auf den Fehlerdaten auf einer zweidimensionalen Karte (44), wobei die Karte umfaßt:
eine erste Achse (46) entsprechend der Länge des Rohrelementes (22), eine zweite Achse (48) entsprechend dem Umfang des Rohrelementes (22),
worin die Fehler des gewählten Fehlertyps als Identifizierungsbilder angezeigt werden, welche den ausgewählten Fehlertyp auf Kosten der anderen Fehlertypen hervorhebt.

29. Gerät nach Anspruch 28, worin die Einrichtung zur Erzeugung von mindestens einem Fehlersignal ein elektromagnetisches Inspektionsgerät (12) umfaßt, gekennzeichnet durch:
mindestens eine Treiberspule zum Induzieren eines Magnetfeldes in dem diskreten Segment des Rohrelementes (22),
mindestens eine Abtastspule zum Detektieren des Magnetfeldes, welches durch die Treiberspule induziert wird, und
mindestens einen Magnetflußdetektor, der auf Veränderungen in dem Fluß aufgrund von Fehlern anspricht und ein entsprechendes Signal erzeugt.

30. Gerät nach Anspruch 28, worin die Einrichtung zum Erzeugen eines Longitudinalsignals gekennzeichnet ist durch:
ein im wesentlichen starres Trägerelement, das nahe dem Rohrelement (22) angeordnet ist;
ein Rad (16), welches drehbar an dem Trägerelement befestigt ist, wobei der äußere Umfang des Rades in Kontakt mit der äußeren Fläche des Rohrelementes (22) steht, während das Gerät betrieben wird, so daß die longitudinale Bewegung des Rohrelementes (22) relativ zu dem Gerät entsprechende Drehbewegungen des Rades (16) erzeugt; und
Signalerzeugungseinrichtung, welche mit dem Rad in Verbindung steht zum Erzeugen eines Signals (28) entsprechend der durchlaufenden Strecke des Rades (16) entlang der äußeren Fläche des Rohrelementes (22).

31. Gerät nach Anspruch 28, worin die Einrichtung zum Erzeugen eines Umfangsignals gekennzeichnet ist durch eine Sensoreinrichtung zum Detektieren der Position der Fehlersignalerzeugungseinrichtung, relativ zum Rohrelement (22), und Einrichtung zum Erzeugen eines Signals, welches die relative Position anzeigt.

32. Gerät nach Anspruch 28, dadurch gekennzeichnet, daß die Fehlersignalerzeugungseinrichtung ein im allgemeinen ringförmigen, drehbaren Fehlerdetektor umfaßt, welcher einen offenen Innenraum von ausreichend großem Durchmesser aufweist, so daß das Rohrelement (22) axial hindurchlaufen kann, wobei der Fehlerdetektor (12) drehbar innerhalb des Geräts vorgesehen ist, so daß das Rohrelement (22) durch den offenen Innenraum des Fehlerdetektors während der Drehung desselben hindurchlaufen kann; und
Sensoreinrichtung umfaßend:
einen Positionsanzeiger (30), welcher starr mit dem Fehlerdetektor (12) verbunden ist und mit diesem drehbar ist,
einen stationären Sensor (14), welcher mit dem Positionsanzeiger (30) zum Anzeigen jeder Drehung des Fehlerdetektors (12) zusammenwirkt und ein drehungsanzeigendes Signal erzeugt;
Zeitgebereinrichtung zum Erzeugen eines Zeitsignals und Rechnereinrichtung (18) zum Empfangen und Korellieren des Drehungssignals und des Zeitsignals und wahlweise Bestimmung der Umfangsposition des Fehlerdetektors relativ zum Rohrelement (22) zu jeder beliebigen Zeit.

33. Gerät nach Anspruch 28 dadurch gekennzeichnet, daß die Einrichtung zum Korellieren der Fehler-, Longitudinal- und Umfangsignale ein Computer ist.

34. Gerät nach Anspruch 28, dadurch gekennzeichnet, daß die Anzeigeeinrichtung mindestens eines der folgenden umfaßt:
(a) einen CRT Schirm (20a);
(b) einen Schreiber (20b);
(c) einen Plotter (20c); oder
(d) einen Drucker (20d).

35. Gerät nach Anspruch 28, worin die Anzeigeeinrichtung (20) in einer Vielzahl von Anzeigebetriebsarten betrieben werden kann, die jede einen anderen Typ von Fehlern anzeigen.

36. Gerät nach Anspruch 28, dadurch gekennzeichnet, daß die Anzeigeeinrichtung die Fehler in einem Langdefektmodus (Figur 4d) anzeigt, in welchem nur eine Untermenge der Fehler einer vorbestimmten Länge hervorgehoben wird und alle anderen Fehler nicht hervorgehoben werden.

37. Gerät nach Anspruch 28, worin die Anzeigeeinrichtung die Fehler in den folgenden alternativen Betriebsarten anzeigt:
ein Langfehlermodus (Figur 4d), in welchem nur Fehler mit einer Länge über einem vorbestimmten Längenwert hervorgehoben werden und alle anderen Fehler nicht hervorgehoben werden;
einen Kurzfehlermodus (Figur 4b), in welchem nur Fehler mit einer Länge unter einem vorbestimmten Längenwert hervorgehoben werden und alle anderen Fehler nicht hervorgehoben werden.

38. Gerät nach Anspruch 28 oder 37, worin die Anzeigeeinrichtung außerdem die Fehler in einem Vollfehlermodus (Figur 4a) anzeigt, in welchem die erste Untermenge von langen Fehlern, die zweite Untermenge kurzen Fehlern und die dritte Untermenge von Winkelfehlern gleichzeitig auf der zweidimensionalen Karte (44) angezeigt werden.

39. Gerät nach Anspruch 28, gekennzeichnet durch
eine Sensoreinrichtung zum Detektieren der Anwesenheit einer Vielzahl von diskreten Punkten auf diesen Fehler;
eine Vorrichtung, welche mit der Sensoreinrichtung zusammenwirkt zum Erzeugen von mindestens einem Signal, welches die Vielzahl von diskreten Punkten anzeigt; und
eine Vorrichtung zum Verarbeiten (18) des mindestens einen Signals, um die relative Position von jeden der Vielzahl von diskreten Punkten mit Bezug zur Längsachse des Rohrelementes (22) zu bestimmen, wobei die relative Position von jedem der Vielzahl von diskreten Punkten mit der Winkelorientierung des Fehlers in Bezug zur Längsachse korrespondiert.

40. Gerät nach Anspruch 39 weiterhin umfaßend eine Zeitgebereinrichtung zum Erzeugen eines Zeitsignals gekennzeichnet durch die Verarbeitungseinrichtung, welche einen Computer (18) zum Empfangen und korellieren des Zeitsignals und des mindestens einen Signals umfaßt, das die Vielzahl von diskreten Punkten anzeigt, wobei die relative Position von jedem der Vielzahl von diskreten Punkten durch Feststellung der Zeitverzögerung innerhalb des mindestens einen Signals für benachbarte diskrete Punkte bestimmt wird und die Zeitverzögerung verwendet wird, um die longitudinale und Umfangsdistanz zwischen den benachbarten diskreten Punkten zu berechnen.

41. Gerät nach Anspruch 39 weiterhin umfaßend eine Zeitgebereinrichtung zum Erzeugen eines Zeitsignals, gekennzeichnet durch eine Sensoreinrichtung, die mindestens einen ersten Sensor zum Detektieren der Position eines ersten diskreten Punktes und mindestens einen zweiten Sensor zum Detektieren der Position eines zweiten diskreten Punktes umfaßt und wobei die Signalerzeugungseinrichtung eine erste Einrichtung zum Erzeugen eines ersten Signals zur Anzeige des ersten diskreten Punktes und eine zweite Einrichtung zum Erzeugen eines zweiten Signals zur Anzeige eines zweiten diskreten Punktes umfaßt, wodurch die Verarbeitungseinrichtung die Zeitverzögerung zwischen dem ersten und zweiten Signal in der Weise mißt, daß die relativen Positionen des ersten und zweiten diskreten Datenpunktes im Bezug auf die Längsachse bestimmt wird.

## Revendications

1. Procédé de détection et de représentation de défauts dans un élément tubulaire (22), comprenant :
l'exploration dudit élément tubulaire par des moyens de détection contrôlant une pluralité de segments discrets s'étendant sur toute la longueur dudit élément tubulaire (22), pour générer un signal (24) qui peut comprendre des parties de signal représentant un défaut dans au moins un segment discret dudit élément tubulaire (22),
la génération d'un signal longitudinal (28) indiquant la position longitudinale dudit au moins un segment discret dudit élément tubulaire (22) ;
la génération d'un signal circonférentiel (26a, 26b) indiquant la position circonférentielle dudit au moins un segment discret dudit élément tubulaire (22) ;
la corrélation desdits signaux de défaut (24), longitudinal (28) et circonférentiel (24, 28, 26a, 26b) pour obtenir une donnée de défaut, ladite donnée de défaut comprenant la position longitudinale et la position circonférentielle dudit défaut dans ledit au moins un segment discret dudit élément tubulaire (22),
caractérisé par
le traitement de ladite donnée de défaut afin de classifier lesdits défauts en types différents en fonction de leur forme, de leur longueur et de leur orientation angulaire, et
la fourniture de ladite donnée de défaut traitée à des moyens d'affichage (20) afin d'afficher sélectivement la présence et la position d'un type sélectionné parmi lesdits types différents de défauts sur une carte bidimensionnelle (44), ladite carte comprenant :
un premier axe (46) correspondant à la longueur dudit élément tubulaire (22),
un second axe (48) correspondant à la circonférence dudit élément tubulaire (22),
dans laquelle des défauts dudit type de défaut sélectionné sont affichés sous la forme d'images d'identification, faisant ressortir ledit type de défaut sélectionné, au détriment d'autres types de défauts.

2. Procédé selon la revendication 1, dans lequel, en tant que possibilité supplémentaire, le nombre et les positions relatifs desdites images d'identification, par rapport auxdits premier et second axes (46, 48), indiquent l'emplacement de tous lesdits types de défauts (50a, 50b, ...) sur ledit élément tubulaire (22) et indiquent en outre ladite forme, ladite longueur et ladite orientation angulaire de chacun de ladite pluralité de défauts concernant ledit élément tubulaire (22) et chacun de ladite pluralité de défauts (50a, 50b, ...) les uns par rapport aux autres.

3. Procédé selon la revendication 1 ou 2, dans lequel ledit- signal de défaut, ledit signal longitudinal et ledit signal circonférentiel comprennent des signaux électriques analogues, ledit procédé étant en outre caractérisé par l'étape d'affichage simultanément desdites valeurs d'amplitude dudit au moins un signal de défaut (50a, 50b, ...) séparément de ladite carte bidimensionnelle (44) de ladite pluralité de défauts.

4. Procédé selon la revendication 1 ou 2, dans lequel lesdites caractéristiques sont affichées dans un tableau (figure 5) ayant au moins quatre parties, caractérisé par :
une première partie pour afficher la position longitudinale dudit défaut,
une deuxième partie pour afficher la fonction circonférentielle dudit défaut,
une troisième partie pour afficher la longueur longitudinale dudit défaut, et
une quatrième partie pour afficher l'orientation angulaire dudit défaut.

5. Procédé selon l'une quelconque des revendications 1 à 3, dans lequel l'étape d'affichage sur des moyens d'affichage est caractérisée par l'affichage de ladite donnée de défaut sur un écran de visualisation (20a) opérationnel pour recevoir sélectivement des impulsions électroniques générées en continu et convertir lesdites impulsions électroniques en images visuelles.

6. Procédé selon l'une quelconque des revendications 1 à 3, dans lequel l'étape d'affichage est caractérisée par la présentation dudit défaut sur un enregistreur graphique (20b).

7. Procédé selon l'une quelconque des revendications 1 à 3, dans lequel l'étape d'affichage est caractérisée par le traçage de ladite donnée de défaut sur un traceur (20c).

8. Procédé selon l'une quelconque des revendications 1 à 3, dans lequel l'étape d'affichage de ladite donnée de défaut est caractérisée par l'impression de ladite donnée de défaut sur une imprimante (20d).

9. Procédé selon l'une quelconque des revendications 1 à 3, dans lequel ladite amplitude dudit au moins un signal de défaut est présentée sur un afficheur (52) séparé de ladite carte bidimensionnelle (44) mais qui est aligné axialement avec ladite carte bidimensionnelle (44).

10. Procédé selon la revendication 1, dans lequel ladite carte bidimensionnelle (44) est définie par une pluralité de pixels, et dans lequel chacun dudit au moins un signal de défaut représente un pixel sur ladite carte bidimensionnelle (44).

11. Procédé selon la revendication 1, caractérisé en ce que ladite carte bidimensionnelle (44) est définie par une pluralité de pixels, et dans lequel chacun dudit au moins un signal de défaut constitue un pixel sur ladite carte bidimensionnelle (44), et représente la présence dudit défaut dans un segment discret particulier dudit élément tubulaire (22).

12. Procédé selon la revendication 1, dans lequel ladite pluralité de défauts comprend une pluralité de défauts de longueurs différentes, seul un sous-ensemble de défauts de valeur de longueur prédéterminée étant accentué sur ladite carte bidimensionnelle (44), tous les autres défauts n'étant pas accentués.

13. Procédé selon la revendication 1, dans lequel ladite pluralité de défauts (50a, 50b, ...) comprend une pluralité de défauts (50a, 50b, ...) de longueurs différentes, et dans lequel ladite étape d'affichage est caractérisée par :
l'affichage sélectif de la présence desdits défauts dans les modes possibles suivants :
un mode défauts longs (figure 4d), dans lequel seuls les défauts ayant une longueur supérieure à une valeur de longueur prédéterminée sont accentués sur ladite carte bidimensionnelle (44), tous les autres défauts n'étant pas accentués ; et
un mode défauts courts (figure 4b), dans lequel seuls les défauts ayant une longueur inférieure à une valeur de longueur prédéterminée sont accentués sur ladite carte bidimensionnelle (44), tous les autres défauts n'étant pas accentués.

14. Procédé selon la revendication 1 ou 13, dans lequel ladite pluralité de défauts comprend un sous-ensemble de défauts angulaires hors de l'alignement axial, avec l'axe central longitudinal dudit élément tubulaire (22), par un seuil angulaire prédéterminé, dans lequel l'étape d'affichage est caractérisée en ce que l'affichage sélectif de la présence dudit défaut comprend un mode défauts angulaires (figure 4c), dans lequel seul ledit sous-ensemble de défauts angulaires hors de l'alignement axial avec ledit axe longitudinal central par ladite valeur angulaire prédéterminée, est accentué sur ladite carte bidimensionnelle (44), tous les autres défauts n'étant pas accentués.

15. Procédé selon la revendication 1 ou l'une quelconque des revendications 12 à 14, dans lequel ladite pluralité de défauts est affichée dans un mode défauts complets (figure 4a), dans lequel ledit premier sous-ensemble de défauts longs, ledit deuxième sous-ensemble de défauts courts et ledit troisième sous-ensemble de défauts angulaires sont affichés simultanément sur ladite carte bidimensionnelle (44).

16. Procédé selon la revendication 1, dans lequel ladite étape de génération d'au moins un signal de défaut est caractérisée par :
la génération d'un flux magnétique dans ledit élément tubulaire (22) ;
la détection au moyen dudit flux magnétique dans une pluralité d'éléments solides discrets dudit élément tubulaire (22) ;
la production, à partir dudit flux magnétique détecté, d'au moins un signal (24) représentant un défaut dans au moins un segment solide discret dudit élément tubulaire (22), pour chacun de ladite pluralité de défauts, chacun dudit au moins un signal de défaut ayant une valeur d'amplitude ; et
l'enregistrement de ladite valeur d'amplitude pour chacun dudit au moins un signal de défaut.

17. Procédé selon la revendication 1 ou 16, dans lequel ladite étape de génération d'au moins un signal de défaut est caractérisée par :
l'enregistrement, dans une mémoire d'un ordinateur (18), d'une valeur d'amplitude pour chacun dudit au moins un signal de défaut ; et
l'établissement de la distinction, au moyen dudit ordinateur (18) de ladite pluralité de types différents de défauts.

18. Procédé selon la revendication 16 ou 17, dans lequel ladite étape d'affichage comprend en outre :
la sélection d'au moins un seuil de signal (54) ;
la comparaison dudit au moins un seuil signal (54) et de ladite valeur d'amplitude de chacun dudit au moins un signal de défaut pour créer un sous-ensemble de points de mesure, prêt à l'affichage ; et
l'affichage uniquement dudit sous-ensemble de points de mesure pour indiquer la présence de ladite pluralité de défauts sur ladite carte bidimensionnelle (44).

19. Procédé selon la revendication 1, dans lequel ladite étape d'affichage comprend :
la sélection, au moyen d'un ordinateur (18) d'au moins un seuil de signal (54) ;
la comparaison, au moyen dudit ordinateur (18) dudit au moins un seuil de signal (54) d'une valeur d'amplitude de chacun dudit au moins un signal de défaut, pour créer un sous-ensemble de points de mesure, prêt à l'affichage ; et
l'affichage uniquement dudit sous-ensemble de points de mesure pour indiquer la présence de ladite pluralité de défauts sur ladite carte bidimensionnelle (44).

20. Procédé selon l'une quelconque des revendications 1 à 3 ou 5 à 19, caractérisé en outre par l'affichage sélectif uniquement d'une partie de ladite carte bidimensionnelle (44).

21. Procédé selon la revendication 20, caractérisé en outre par l'affichage et l'agrandissement simultané de ladite partie de ladite carte bidimensionnelle (44).

22. Procédé selon la revendication 16, dans lequel ladite étape d'affichage est caractérisée par :
la sélection d'au moins un seuil de signal (54) ;
la comparaison dudit au moins un seuil de signal (54) à ladite valeur d'amplitude de chacun dudit au moins un signal de défaut, pour créer un sous-ensemble de points de mesure, prêt à l'affichage ; et l'affichage dudit sous-ensemble de points de mesure pour indiquer la présence de ladite pluralité de défauts sur ladite carte bidimensionnelle (44).

23. Procédé selon la revendication 1, caractérisé par les étapes de :
détection de la présence d'une pluralité de points discrets sur ledit défaut ;
comparaison desdits points discrets à une image commune de référence, pour ainsi établir la position relative de chacun desdits points discrets par rapport au restant de ladite pluralité de points discrets ; et
corrélation de ladite position relative de chacun desdits points discrets avec l'orientation longitudinale dudit élément tubulaire, pour ainsi déterminer l'orientation angulaire de ladite pluralité de points discrets, par rapport audit axe longitudinal dudit élément tubulaire.

24. Procédé selon la revendication 23, caractérisé en outre par l'étape consistant à afficher sur des moyens afficheurs ladite orientation angulaire de ladite pluralité de points discrets.

25. Procédé selon la revendication 23, dans lequel ladite étape de détection de la présence d'une pluralité de points discrets sur ledit défaut est caractérisée par la génération d'une pluralité de signaux représentatifs de ladite pluralité de points discrets, chacun desdits points discrets étant représenté par un signal correspondant ; et le traitement desdits signaux pour établir la position de chacun desdits points discrets représenté par chacun desdits signaux.

26. Procédé selon la revendication 23, dans lequel ladite étape de comparaison desdits points discrets à une image commune de référence est caractérisée par :
l'établissement du point temporel auquel chacun desdits signaux indique la présence d'un point discret correspondant ;
la mesure du temps écoulé entre la détection de chaque point discret adjacent sur ledit défaut ; et
l'utilisation dudit temps écoulé pour calculer la position relative de chacun desdits points discrets adjacents.

27. Procédé selon la revendication 23, comprenant en outre les étapes consistant à produire un signal horaire, dans lequel ladite étape de détection de la présence d'une pluralité de points discrets sur ledit défaut est caractérisée par :
la génération d'un premier signal indiquant un premier point discret ;
la génération d'un second signal indiquant un second point discret ; et dans lequel
ladite étape consistant à comparer lesdits points discrets à une image commune, de référence comprend le calcul du temps écoulé entre lesdits premier et second signaux.

28. Dispositif pour la détection et la représentation de défauts dans un élément tubulaire (22), comprenant :
des moyens d'exploration destinés à explorer ledit élément tubulaire par des moyens détecteurs contrôlant une pluralité de segments discrets s'étendant sur toute la longueur dudit élément tubulaire,
des moyens (12) destinés à générer des signaux (24) qui peuvent comprendre des parties de signal représentant un défaut dans au moins un segment discret dudit élément tubulaire (22),
des moyens (16) destinés à générer un signal longitudinal (28) indiquant la position longitudinale dudit au moins un segment discret dudit élément tubulaire (22),
des moyens (14) destinés à générer un signal circonférentiel (26a, 26b) indiquant la position circonférentielle dudit au moins un segment discret dudit élément tubulaire (22),
des moyens destinés à corréler lesdits signaux de défaut, longitudinal et circonférentiel (24, 28, 26a, 26b) pour obtenir une donnée de défaut, ladite donnée de défaut comprenant la position longitudinale et la position circonférentielle desdits défauts dans ledit au moins un segment discret dudit élément tubulaire (22) ; caractérisé par
le traitement de moyens destinés à traiter ladite donnée de défaut de manière à classifier lesdits défauts en différents types en fonction de leur forme, de leur longueur et de leur orientation angulaire, et
des moyens d'affichage (20) destinés à présenter sélectivement la présence et la position d'un type sélectionné desdits différents types de défauts, sur la base de ladite donnée de défaut, sur une carte bidimensionnelle (44), ladite carte comprenant :
un premier axe (46) correspondant à la longueur dudit élément tubulaire (22) ;
un second axe (48) correspondant à la circonférence dudit élément tubulaire (22) ;
dans lequel des défauts dudit type de défaut sélectionné sont présentés sous la forme d'images d'identification, faisant ressortir ledit type de défaut sélectionné au détriment d'autres types de défauts.

29. Dispositif selon la revendication 28, dans lequel lesdits moyens de génération d'au moins un signal de défaut comprennent un appareil de contrôle électromagnétique (12), caractérisé par :
au moins une bobine excitée pour induire un champ magnétique dans ledit segment discret dudit élément tubulaire (22),
au moins une bobine détectrice pour détecter le champ magnétique induit par ladite bobine excitée, et
au moins un détecteur de flux magnétique, réagissant aux variations dudit flux, provoquées par des défauts, et produisant un signal correspondant à ces variations.

30. Dispositif selon la revendication 28, dans lequel lesdits moyens de génération d'un signal longitudinal sont caractérisés par :
un élément de support globalement rigide, disposé adjacent audit élément tubulaire (22) ;
un galet (16) fixé de manière rotative audit élément de support, le périmètre extérieur dudit galet étant en contact avec la surface externe dudit élément tubulaire (22) lorsque ledit dispositif est en fonctionnement, de telle manière que ledit mouvement longitudinal dudit élément tubulaire (22), par rapport audit dispositif, provoque un mouvement de rotation correspondant dudit galet (16) ; et
des moyens générateurs de signaux, communiquant avec ledit galet pour produire un signal (28) correspondant à la distance parcourue par ledit galet (16) le long de la surface externe dudit élément tubulaire (22).

31. Dispositif selon la revendication 28, dans lequel lesdits moyens de génération d'un signal circonférentiel sont caractérisés par des moyens palpeurs pour détecter la position desdits moyens générateurs de signaux par rapport audit élément tubulaire (22) ; et les moyens pour produire un signal représentatif de ladite position relative.

32. Dispositif selon la revendication 28, caractérisé en ce que :
lesdits moyens générateurs de signaux de défaut comprennent un détecteur de défauts, rotatif et de forme globalement annulaire, ayant un intérieur ouvert de diamètre suffisamment grand pour permettre le passage axial dudit élément tubulaire (22),
ledit détecteur de défauts (12) est monté de manière rotative à l'intérieur dudit dispositif de telle manière que ledit élément tubulaire (22) puisse passer par ledit intérieur ouvert dudit détecteur de défauts pendant la rotation de celui-ci ; et
lesdits moyens palpeurs comprennent :
un indicateur de position (30), rigidement fixé audit détecteur de défauts (12) et pouvant tourner avec lui,
un capteur fixe (14), coopérant avec ledit indicateur de position (30), pour détecter chaque tour complet dudit détecteur de défauts (12) et pour produire un signal de tour représentatif de celui-ci ;
des moyens d'horloge pour produire un signal horaire, et des moyens de calcul (18) pour recevoir et corréler ledit signal de tour et ledit signal horaire, et pour déterminer sélectivement la position circonférentielle dudit détecteur de défauts par rapport audit élément tubulaire (22) à un moment donné quelconque.

33. Dispositif selon la revendication 28, caractérisé en ce que lesdits moyens pour corréler lesdits signaux de défaut, longitudinal et circonférentiel sont un ordinateur.

34. Dispositif selon la revendication 28, caractérisé en ce que lesdits moyens d'affichage comprennent au moins l'un des éléments suivants :
(a) un écran cathodique (20a) ;
(b) un enregistreur graphique (20b)
(c) un traceur (20c) ; ou
(d) une imprimante (20d).

35. Dispositif selon la revendication 28, dans lequel lesdits moyens d'affichage (20) peuvent fonctionner dans une pluralité de modes de présentation, chacun pour présenter un type différent de défaut.

36. Dispositif selon la revendication 28, caractérisé en ce que lesdits moyens d'affichage affichent lesdits défauts dans un mode défauts de longueur (figure 4d), dans lequel seul un sous-ensemble de défauts d'une valeur de longueur prédéterminée est accentué, tous les autres défauts n'étant pas accentués.

37. Dispositif selon la revendication 28, dans lequel lesdits moyens d'affichage affichent des défauts dans les modes possibles suivants :
un mode défauts longs (figure 4d), dans lequel seuls des défauts ayant une longueur supérieure à une valeur de longueur prédéterminée sont accentués, tous les autres défauts n'étant pas accentués ; et
un mode défauts courts (figure 4b), dans lequel seuls des défauts ayant une longueur inférieure à une valeur de longueur prédéterminée sont accentués, tous les autres défauts n'étant pas accentués.

38. Dispositif selon la revendication 28 ou 37, dans lequel lesdits moyens d'affichage affichent lesdits défauts en outre dans un mode défauts complets (figure 4a), dans lequel ledit premier sous-ensemble de défauts longs, ledit deuxième sous-ensemble de défauts courts et ledit troisième sous-ensemble de défauts angulaires sont simultanément affichés sur ladite carte bidimensionnelle (44).

39. Dispositif selon la revendication 28, caractérisé par :
des moyens capteurs, destinés à détecter la présence d'une pluralité de points discrets sur ledit défaut ;
des moyens coopérant avec lesdits moyens capteurs pour produire au moins un signal représentatif de ladite pluralité de points discrets ; et
des moyens destinés à traiter (18) ledit au moins un signal, pour déterminer la position relative de chacun de ladite pluralité de points discrets par rapport audit axe longitudinal dudit élément tubulaire (22), dans lequel ladite position relative de chacun de ladite pluralité de points discrets correspond à l'orientation angulaire dudit défaut par rapport audit axe longitudinal.

40. Dispositif selon la revendication 39, comprenant en outre des moyens d'horloge pour produire un signal horaire, caractérisé en ce que lesdits moyens de traitement comprennent un ordinateur (18) pour recevoir et corréler ledit signal horaire et ledit au moins un signal représentatif de ladite pluralité de points discrets, dans lequel ladite position relative de chacun de ladite pluralité de points discrets est déterminée en établissant le délai dudit au moins un signal représentatif de points discrets adjacents et en utilisant ledit délai pour calculer l'espacement longitudinal et circonférentiel entre lesdits points discrets adjacents.

41. Dispositif selon la revendication 39, comprenant en outre des moyens d'horloge pour produire un signal horaire, caractérisé en ce que lesdits moyens capteurs comprennent au moins un premier capteur pour détecter la position d'un premier point discret, et au moins un second capteur pour détecter la position d'un second point discret ; et en ce que lesdits moyens générateurs de signaux comprennent un premier moyen pour produire un premier signal, représentatif dudit premier point discret, et un second moyen pour produire un second signal, représentatif dudit second point discret ; dans lequel lesdits moyens de traitement mesurent le temps écoulé entre lesdits premier et second signaux, pour ainsi déterminer les positions relatives desdits premier et second points discrets par rapport audit axe longitudinal.
